# EUROPEAN PATENT APPLICATION

(11) **EP 3 597 606 A1**
(43) Date of publication of application: **22.01.2020**
(21) Application number: 18768511.0
(22) Date of filing: 16.03.2018
(51) Int. Cl.: C02F 1/50, B63B 13/00, C02F 1/70, C02F 1/76

(54) **BALLAST WATER TREATMENT DEVICE**

(30) Priority: 16.03.2017 JP 2017051565
(71) Applicant: JFE Engineering Corporation, Tokyo 100-0005 (JP)
(72) Inventor: FUJIWARA, Shigeki, Tokyo 100-0005 (JP); TSUJI, Takeshi, Tokyo 100-0005 (JP); SUGA, Takeshi, Tokyo 100-0005 (JP); YAMASHITA, Mari, Tokyo 100-0005 (JP); HARA, Kota, Tokyo 100-0005 (JP)
(74) Representative: Sajda, Wolf E.
(86) International application number: PCT/JP2018/010477
(87) International publication number: WO 2018/169056

(57) **Abstract**

To provide a ballast water treatment apparatus that can eliminate the possibility that the sterilizing agent supply device, and the like, may be adversely affected by the reduction reaction heat that is generated in the detoxication of the sterilizing agent residue. The ballast water treatment apparatus includes a sterilizing agent supply device (20) that supplies a chlorine-based sterilizing agent into the inside of a ballast water piping (3) through which ballast water is passed toward a ballast tank (2); a reduction agent supply device (30) that supplies a reduction agent that is reacted with the chlorine-based sterilizing agent into the inside of the ballast water piping (3); a first piping (22) that transfers the chlorine-based sterilizing agent that has remained in the sterilizing agent supply device (20) into the inside of the ballast water piping (3); a second piping (32) that transfers the reduction agent into the inside of the ballast water piping (3); and an injection part (7) that injects the chlorine-based sterilizing agent transferred from the first piping (22) into the inside of the ballast water piping, the second piping (32) being connected to the injection part(7), and the chlorine-based sterilizing agent that has remained in the sterilizing agent supply device (20) being injected into the inside of the ballast water piping (3) together with the reduction agent from an opening part (7a) that is provided for the injection part (7).

## Description

### Technical Field

The present invention relates to a ballast water treatment apparatus that is provided with a sterilizing agent supply device configured such that, in order to sterilize seawater, brackish water, fresh water, or other water that is taken in from outboard, being transferred in the inside of an inboard ballast water piping, and contained in an inboard ballast tank as ballast water (including the ballast water that has been contained in a ballast tank; hereinbelow, these types of water may be represented by a term of seawater for convenience of explanation or generically be referred to as treatment object water), it injects a chemical agent to perform sterilization by utilizing a sterilizing action possessed by free available chlorine (hereinbelow, such a chemical agent will be called as a "chlorine-based sterilizing agent", unless otherwise defined) into the inside of the ballast water piping, and more particularly, relates to the same ballast water treatment apparatus, including a mechanism with which at least a part of the chlorine-based sterilizing agent or the component substance thereof (hereinbelow, to be called as "the sterilizing agent residue", unless otherwise defined) that has remained in the inside of the sterilizing agent supply device, or a piping connected thereto and devices mounted to that piping, such as a pump, a valve, a tank, and a measuring instrument (hereinbelow, to be generically called as "the piping route" that is connected to the sterilizing agent supply device) without being used for sterilization of the seawater, brackish water, fresh water, or other water is discharged into the inside of the ballast water piping, thus being removed from the inside of the sterilizing agent supply device or the piping route.

### Background Art

Typical ballast water treatments to sterilize the ballast water for ocean vessels by use of a sterilizing agent is basically constituted by two different treatments, i.e., a sterilizing treatment, with which seawater taken in from outboard is filtered, and after the filtration, a chlorine-based sterilizing agent is injected into the seawater, and the seawater, having been injected with the sterilizing agent, is contained into a ballast tank or the ballast tank is filled with the seawater, having been injected with the sterilizing agent, thereby the ballast water to be contained in the ballast tank being sterilized (hereinbelow this treatment to be called as "the sterilizing treatment in intake"), and a reduction treatment, with which the seawater that has been contained as the ballast water in the ballast tank, having been injected with the sterilizing agent, is taken in from the ballast tank, and then injected with a chemical agent containing a reducing substance having an action of reducing the free available chlorine providing oxidizability (hereinbelow, to be called as "the reduction agent", unless otherwise defined) to curtail or eliminate it, thereby detoxicating the seawater to a level at which the outboard discharge is allowable, and thereafter, outboard discharge is performed (hereinbelow this treatment to be called as "the reduction treatment in discharge"). As the sterilizing treatment in intake, a treatment using an aqueous solution of a chlorine-based chemical agent, containing free available chlorine, as the chlorine-based sterilizing agent, is known.

The chlorine-based chemical agent refers to a chemical agent that releases free available chlorine having oxidizability in the water. An aqueous solution of the chlorine-based chemical agent can be prepared by mixing the chlorine-based chemical agent liquid at room temperature with water or diluting it with water or dissolving the chlorine-based chemical agent in powder, granule, tablet, or any other form of solid body at room temperature into water.

In the case where an aqueous solution of the chlorine-based chemical agent is used to sterilize the ballast water to be contained in the ballast tank, after completion of the sterilizing treatment in intake, the aqueous solution of the chlorine-based chemical agent that has not been used for sterilization of the ballast water remains in the inside of the sterilizing agent supply device or a piping route connected thereto. This residue causes precipitation of the chlorine-based chemical agent or the component substance thereof with the concentration thereof resulting from the evaporation of the water as the solvent therefor, or with a decrease in solubility of the chlorine-based chemical agent in water resulting from a fall of the temperature (for example, in the case where the chlorine-based chemical agent is sodium dichloroisocyanurate, the isocyanuric acid is precipitated as a solid). The precipitation tends to be caused particularly in the liquid-contact area between the aqueous solution of the chlorine-based chemical agent and the piping or a device, such as a pump, a valve, a tank, or a measuring instrument that is mounted thereto.

Deposits of the chlorine-based chemical agent or the component substance thereof have a possibility that, with the lapse of time, may grow, being sedimented and solidified, in the inside of the sterilizing agent supply device or the piping route connected thereto. Such a possibility is increased particularly in the case where the raw material of the sterilizing agent is a solid chlorine-based chemical agent. If the raw material is solid, evaporation of the water as the solvent or a decrease in solubility of the raw material into water will directly lead to generation of a deposit of the raw material.

Generation, sedimentation, and solidification of such a deposit can cause blocking of the piping, an increase in pressure loss or other obstacle to circulation, and a failure, such as a malfunction, of a device mounted to the piping, such as a pump, a valve, a tank, or a measuring equipment (which, hereinbelow, may generically be called as "operation failure" attributable to the sterilizing agent residue), and finally provide an obstacle factor for normally conducting the ballast water treatment.

In order to solve this problem, a ballast water treatment apparatus has been invented and known that includes a mechanism with which, after the sterilizing treatment in intake, at least a part of the aqueous solution of the chlorine-based chemical agent or the component substance thereof that has remained in the inside of the sterilizing agent supply device or the inside of the piping route connected thereto is discharged into the inside of the ballast water piping to thereby remove it from the inside of the sterilizing agent supply device or the piping route connected thereto (Patent Document 1).

This mechanism causes the sterilizing agent residue to be reacted with a reduction agent for reduction of the free available chlorine derived from the sterilizing agent residue to thereby curtail or eliminate the free available chlorine for detoxication of the sterilizing agent residue by performing the step (A), in which the sterilizing agent residue that exists in the inside of the sterilizing agent supply device or the piping route connected thereto is injected, without previously reacting it with a reducing substance, into the inside of the ballast water piping from the injection part for injecting the chlorine-based sterilizing agent supplied from the sterilizing agent supply device (the sterilizing agent injection part) into the inside of the ballast water piping or from the specialized injection part (the residue injection part), and thereafter, at a location on the downstream side of the sterilizing agent injection part or the residue injection part, a reduction agent supplied from the reduction agent supply device is injected into the inside of the ballast piping from the injection part for injecting the reduction agent (the reduction agent injection part), or the step (B), in which the sterilizing agent residue that exists in the inside of the sterilizing agent supply device or the piping route connected thereto is previously reacted with the reducing substance before being injected into the inside of the ballast water piping, and thereafter is injected from the sterilizing agent injection part or the residue injection part into the inside of the ballast piping.

In the above steps (A) and (B), a typical example of chlorine-based sterilizing agent used is an aqueous solution of a chlorinated isocyanuric acid compound, such as trichloroisocyanuric acid, sodium dichloroisocyanurate or its hydrate, or potassium dichloroisocyanurate, and a typical example of reduction agent used is an aqueous solution of sodium sulfite or sodium thiosulfate. In the above step (B), a typical example of reducing substance is a reduction agent or a dilution liquid thereof that is supplied from the reduction agent supply device.

### Citation List

### Patent Literature

- Patent Document 1:: Japanese Patent JP 5 924 447 B1

### Summary of the Invention

### Technical Problem

However, in the case of the above step (A), since the reduction agent injection part is located in a remote location on the downstream side of the sterilizing agent injection part or the residue injection part, if the seawater in the inside of the ballast water piping is stopped, the sterilizing agent residue that has been injected into the inside of the ballast water piping cannot be sufficiently reacted with the reduction agent that has been injected into the inside of the ballast water piping, resulting in impossibility of detoxication. In other words, in the case where the seawater in the ballast water piping is stopped, the above step (A) is not capable of sufficiently achieving the purpose thereof.

In addition, in the case of the above step (B), if the concentration of a substance having a reduction action that is possessed by the reducing substance for detoxicating the sterilizing agent residue is high, the reduction reaction heat that is generated in reducing the sterilizing agent residue (the heat generation) will become excessive, there arising a possibility that the sterilizing agent supply device and the piping route connected thereto may be adversely affected.

And yet, if it is intended to conduct detoxication of the sterilizing agent residue using a reducing substance that is low in the concentration of a substance having a reduction action, the reducing substance will be required by an increased quantity, and thus equipment and devices that are required to secure the increased quantity of the reducing substance will have to be additionally prepared.

The present invention has been made in view of the above problems, and is intended to provide a ballast water treatment apparatus with which, in removing the sterilizing agent residue from the inside of the sterilizing agent supply device or the piping route connected thereto, regardless of whether the seawater is flowing or stopped in the inside of the ballast water piping, the sterilizing agent residue can be detoxicated through the reaction with the reduction agent, and the possibility that the reduction reaction heat generated in that detoxication may have an adverse effect on the sterilizing agent supply device or the piping route connected thereto can be eliminated.

### Means for Solving the Problems

The ballast water treatment apparatus according to a first aspect of the present invention to solve the above problems is a ballast water treatment apparatus for sterilizing ballast water to be contained in a ballast tank in an ocean vessel, including:
a sterilizing agent supply device that supplies an aqueous solution of a chlorine-based chemical agent as a chlorine-based sterilizing agent into the inside of a ballast water piping that transfers seawater, brackish water, fresh water or other water taken in from outboard toward the ballast tank,
a reduction agent supply device that supplies a reduction agent that is reacted with the chlorine-based sterilizing agent or the component substance thereof into the inside of the ballast water piping,
a first piping to which the sterilizing agent supply device is connected and that transfers the chlorine-based sterilizing agent or the component substance thereof toward the inside of the ballast water piping,
a second piping to which the reduction agent supply device is connected and that transfers the reduction agent toward the inside of the ballast water piping, and
an injection part to which the first piping and the second piping are connected, the injection part injecting the chlorine-based sterilizing agent or the component substance thereof that is transferred from the first piping into the inside of the ballast water piping, and injecting the reduction agent that is transferred from the second piping into the inside of the ballast water piping,
the chlorine-based sterilizing agent or the component substance thereof being not mixed with the reduction agent before reaching the injection part through the first piping, and being mixed with the reduction agent after being supplied into the inside of the ballast water piping from the injection part.

The ballast water treatment apparatus according to a second aspect of the present invention is a ballast water treatment apparatus according to the first aspect of the present invention, wherein the chlorine-based sterilizing agent or the component substance thereof is at least a part of that which has remained in the sterilizing agent supply device or the inside of the first piping without being used for sterilization of the ballast water.

The ballast water treatment apparatus according to a third aspect of the present invention is a ballast water treatment apparatus according to the second aspect of the present invention, wherein the chlorine-based sterilizing agent or the component substance thereof is injected into the inside of the ballast water piping from the injection part together with the reduction agent or after the reduction agent having been injected into the inside of the ballast water piping from the injection part.

The ballast water treatment apparatuses according to fourth to sixth aspects of the present invention are ballast water treatment apparatuses according to the first to third aspects of the present invention, respectively, wherein the injection part has a double pipe structure with which the first piping is provided as an inner pipe, and the second piping is provided as an outer pipe.

The ballast water treatment apparatuses according to seventh to ninth aspects of the present invention are ballast water treatment apparatuses according to the fourth to sixth aspects of the present invention, respectively, wherein the tip of the first piping is located in a location closer to the cross-sectional center of the ballast water piping than the tip of the second piping, the first piping being extended into the inside of the ballast water piping longer than the second piping.

The ballast water treatment apparatuses according to tenth to twelfth aspects of the present invention are ballast water treatment apparatuses according to the fourth to sixth aspects of the present invention, respectively, wherein the tip of the first piping is located away from the cross-sectional center of the ballast water piping in a direction passing through the cross-sectional center or in a direction opposite thereto within the range of a distance of half the cross-sectional radius.

The ballast water treatment apparatuses according to thirteenth and fourteenth aspects of the present invention are ballast water treatment apparatuses according to the first and second aspects of the present invention, respectively, wherein there is provided a return piping route with which seawater, brackish water, fresh water or other water (including the ballast water that has been contained in the ballast tank) that is passed or stopped in the inside of the ballast water piping is returned from a location on the downstream side of the ballast water piping to a location on the upstream side of the ballast water piping and on the downstream side of a ballast pump.

The ballast water treatment apparatuses according to fifteenth and sixteenth aspects of the present invention are ballast water treatment apparatuses according to the first and second aspects of the present invention, respectively, wherein the return piping route is a piping route with which seawater, brackish water, fresh water or other water that is passed or stopped in the inside of the ballast water piping is returned from a location on the downstream side of the injection part to a location on the upstream side of the injection part and on the downstream side of a ballast pump.

The ballast water treatment apparatuses according to seventeenth and eighteenth aspects of the present invention are ballast water treatment apparatuses according to the thirteenth and fourteenth aspects of the present invention, respectively, wherein the return piping route is a piping route with which seawater, brackish water, fresh water or other water that is passed or stopped in the inside of the ballast water piping is returned from a location on the downstream side of the injection part to a location on the upstream side of the injection part and on the downstream side of a ballast pump.

The ballast water treatment apparatuses in accordance with the present invention include ballast water treatment apparatuses according to the seventh to ninth aspects of the present invention, respectively, wherein the tip of the first piping is located away from the cross-sectional center of the ballast water piping in a direction passing through the cross-sectional center or in a direction opposite thereto within the range of a distance of half the cross-sectional radius.

### Advantageous Effects of the Invention

According to the first aspect of the present invention, in injecting the sterilizing agent residue that exists in the inside of the sterilizing agent supply device or the piping route connected thereto into the inside of the ballast water piping from the injection part to thereby remove it from the inside of the sterilizing agent supply device or the piping route connected thereto, at least any one of the following advantageous effects 1 to 5 will be provided. (Needless to say, the advantageous effects that are provided by the first aspect of the present invention are those commonly offered by each of the other aspects of the present invention.)

### Advantageous Effect 1:

With the first embodiment of the present invention, the sterilizing agent residue is led to the injection part through the first piping, while the reduction agent being led to the injection part through the second piping, in other words, both substances of the sterilizing agent residue and the reduction agent are led to the injection part through separate pipings, respectively, and thereafter, are injected into the inside of the ballast water piping from the same injection part (more exactly, one or more than one opening parts provided for the same injection part, being opened toward the inside of the ballast water piping). Therefore, according to this first aspect of the present invention, until both substances of the sterilizing agent residue and the reduction agent reach the same injection part, respectively, and thereafter join each other, they will not be contacted or mixed with each other, and thus not be reacted with each other, and therefore reduction reaction heat will not be generated, thereby there being no possibility that the sterilizing agent supply device or the piping route connected thereto may be adversely affected by reduction reaction heat.

### Advantageous Effect 2:

With the first aspect of the present invention, regardless of whether the seawater is stopped or is flowing in the inside of the ballast water piping, both substances of the sterilizing agent residue and the reduction agent are injected from the same injection part into the inside of the ballast water piping, thereby both substances being put close to or contacted with each other immediately after the injection thereof, and thus also after the injection, the opportunity of both substances being contacted or mixed and thus reacted with each other being maintained. Therefore, according to this first aspect of the present invention, regardless of whether the seawater is stopped or is flowing in the inside of the ballast water piping, the free available chlorine derived from the sterilizing agent residue can be curtailed or eliminated, whereby the sterilizing agent residue can be finally detoxicated.

### Advantageous Effect 3:

With the first aspect of the present invention, the reaction between the sterilizing agent residue and the reduction agent will be caused in the inside of the ballast water piping, which has a large internal volume, and in addition, the seawater that is normally provided in the inside of the ballast water piping performs a cooling action, thereby the temperature rise due to the reduction reaction heat being suppressed by the cooling action of the seawater. Therefore, according to this first embodiment, the reduction reaction heat will not have an adverse effect on the sterilizing agent supply device or the piping route connected thereto.

### Advantageous Effect 4:

With the first embodiment of the present invention, as described above, the sterilizing agent supply device and the components thereof will not be adversely affected by reduction reaction heat before the sterilizing agent residue and the reduction agent being injected into the inside of the ballast water piping. Therefore, according to the first aspect of the present invention, as the reduction agent, that which has a high concentration of a substance providing a reduction action or a substance that is stronger in reduction action can be used.

### Advantageous Effect 5:

With the first aspect of the present invention, as described above, the reduction reaction heat that is generated in the inside of the ballast water piping will not reach so high a temperature as to adversely affect the sterilizing agent supply device and the components thereof, since the ballast water piping has a large internal volume and the seawater that is normally provided in the inside of the ballast water piping performs a cooling action. Therefore, according to the first aspect of the present invention, as the reduction agent, that which has a high concentration of a substance providing a reduction action or a substance that is stronger in reduction action can be used.

The sterilizing agent residue falls under the chlorine-based sterilizing agent or the component substance thereof, however, the chlorine-based sterilizing agent for sterilizing the ballast water to be contained in the ballast tank also falls under the same. Therefore, the first aspect of the present invention is not limited to the case where the substance that is injected into the inside of the ballast water piping from the injection part through the first piping is the sterilizing agent residue, but also includes the case where that substance is the chlorine-based sterilizing agent for sterilizing the ballast water that is to be contained in the ballast tank.

Contrarily, the second aspect of the present invention is limited to the case where the substance that is injected into the inside of the ballast water piping from the injection part through the first piping is at least a part of that which has remained in the inside of the sterilizing agent supply device or the first piping without being used for sterilization of the ballast water, in other words, the sterilizing agent residue. However, that is the reason why, this second aspect of the present invention offers the same advantageous effects as those of the first aspect of the present invention.

With each of the first and second aspects of the present invention, there is not provided a limitation to the relationship between the timing at which the substance (including the sterilizing agent residue) is injected into the inside of the ballast water piping through the first piping and the timing at which the reduction agent is injected into the inside of the ballast water piping through the second piping. Therefore, each of the first and second aspects of the present invention is not limited to any one of the following timing relations (i) to (iii), and will not exclude any one of these timing relations.
(i) At the same time when the substance is injected into the inside of the ballast water piping through the first piping, the reduction agent is injected into the inside of the ballast water piping through the second piping.
(ii) Before the substance is injected into the inside of the ballast water piping through the first piping, the reduction agent is injected into the inside of the ballast water piping through the second piping.
(iii) After the substance has been injected into the inside of the ballast water piping through the first piping, the reduction agent is injected into the inside of the ballast water piping through the second piping.

However, with the timing relation of the above (iii), when the substance that is injected into the inside of the ballast water piping through the first piping is a sterilizing agent residue that is not uniform in denseness (particularly, it includes a solidified matter), if the sterilizing agent residue is injected into the inside of the ballast water piping prior to the reduction agent being injected, it will become difficult to sufficiently react the sterilizing agent residue with the reduction agent in a shorter time period. In order to cause the sterilizing agent residue to be well contacted or mixed with the reduction agent, the timing relations of the above (i) and (ii) are more preferable than the timing relation of the above (iii).

Contrarily, the third aspect of the present invention is restricted in timing relation to those of the above (i) or (ii), excluding the timing relation of the above (iii). Therefore, according to this third aspect of the present invention, the substance that is injected into the inside of the ballast water piping through the first piping can be better contacted or mixed with the reduction agent.

Since the sterilizing agent residue and the reduction agent are required to be well contacted or mixed with each other, it is desirable that, as an operating method [c1], both substances of the sterilizing agent residue and the reduction agent be simultaneously injected into the inside of the ballast water piping 3, or, that, as an operating method [c2], first, the reduction agent be injected into the inside of the ballast water piping to be provided in the seawater in the inside of the ballast water piping, and then the sterilizing agent residue be injected toward the location where the reduction agent exists. If the sterilizing agent residue is injected into the inside of the ballast water piping prior to the reduction agent being injected, in the case where the sterilizing agent residue is not uniform in denseness (particularly, in the case where a solidified matter is contained therein), it is difficult to cause a sufficient reaction between the sterilizing agent residue and the reduction agent in a shorter time period.

With the third aspect of the present invention, since the chlorine-based sterilizing agent or the component substance thereof is injected into the inside of the ballast water piping from the injection part together with the reduction agent or after the reduction agent having been injected into the inside of the ballast water piping from the injection part, whereby mutual mixing and reaction of both substances in the inside of the ballast water piping can be effectively progressed. Therefore, according to the third aspect of the present invention, as compared to the first or second aspect of the present invention, curtailment or elimination of the free available chlorine contained in the substance (including the sterilizing agent residue) that is injected into the inside of the ballast water piping from the injection part through the first piping, and finally detoxication of the relevant substance can be effectively performed.

According to each of the fourth to sixth aspects of the present invention, the injection part has a double pipe structure with which the first piping is an inner pipe, and the second piping is an outer pipe, and thus when the sterilizing agent residue and the reduction agent are injected into the inside of the ballast water piping from the opening part at the tip of the first piping and the opening part at the tip of the second piping, respectively, there will be provided a state in which the former, the sterilizing agent residue, is wrapped by the latter, the reduction agent, whereby the sterilizing agent residue can be sufficiently mixed with the reduction agent to be reacted therewith, and thus detoxication of the sterilizing agent residue can be more easily or effectively carried out.

With each of the seventh to ninth aspects of the present invention, the tip of the first piping is located in a location closer to the cross-sectional center of the ballast water piping than the tip of the second piping. Then, the tip of the first piping is exposed to a higher negative pressure from the ballast water flowing near the cross-sectional center at a higher speed of the ballast water piping than would be in the case where the tip of the first piping is in a location in the vicinity of the internal wall surface of the ballast water piping, thereby, due to the negative pressure, a suction force acting from the inside of the first piping toward the inside of the ballast water piping being applied to the tip of the first piping. Therefore, according to the fifth and sixth aspects of the present invention, even the sterilizing agent residue with which coagulation, sedimentation or solidification has been progressed, resulting in the lowered fluidity, can be easily moved to the inside of the ballast water piping by the suction force.

With each of the seventh and ninth aspects of the present invention, it will be sufficient that the tip of the first piping is in a location closer to the cross-sectional center of the ballast water piping than the tip of the second piping, and it is not required that the tip of the first piping be extended to a location that matches the cross-sectional center. The tip of the first piping may be extended to a location close to the cross-sectional center rather than not reaching the cross-sectional center, or may be extended to a location beyond the cross-sectional center. In addition, the tip of the second piping need not be located closer to the cross-sectional center of the ballast water piping than the tip of the first piping. However, in the case where, regardless of whether the fluidity of the reduction agent is high or low, it is desired that the reduction agent be easily mixed with the sterilizing agent residue, it is preferable that the tip of the second piping be also located close to the cross-sectional center.

According to each of the tenth and twelfth aspects of the present invention, the tip of the first piping is located away from the cross-sectional center of the ballast water piping in a direction passing through the cross-sectional center or in a direction opposite thereto within the range of a distance of half the cross-sectional radius, and thus a suction force acting from the inside of the first piping toward the inside of the ballast water piping being applied to the tip of the first piping, whereby even the sterilizing agent residue with which coagulation, sedimentation or solidification has been progressed, resulting in the lowered fluidity, can be relatively easily moved to the inside of the ballast water piping by the suction force.

According to each of the thirteenth and fourteenth aspects of the present invention, the seawater, the brackish water, the fresh water or the other water in the inside of the ballast water piping (including the ballast water that has been contained in the ballast tank; these are generically referred to as the treatment object water) is returned to the upstream side from the downstream side of the ballast water piping through the return piping route, thereby stirring of the treatment object water being promoted.

Therefore, in the case where a chlorine-based sterilizing agent is injected into the treatment object water, the sterilization effect thereon can be promoted, or in the case where, in the treatment object water, free available chlorine derived from the chlorine-based sterilizing agent or the sterilizing agent residue remains, mixing and reaction of the chlorine-based sterilizing agent and/or the sterilizing agent residue with the reduction agent, and finally detoxication of the treatment object water can be promoted.

According to each of the fifteenth and sixteenth aspects of the present invention, the seawater, the brackish water, the fresh water or the other water in the inside of the ballast water piping (including the ballast water that has been contained in the ballast tank; these are generically referred to as the treatment object water) is returned to the upstream side from the downstream side of the injection part through the return piping route, thereby, in the case where the chlorine-based sterilizing agent is injected into the inside of the ballast water piping from the injection part, mixing of the chlorine-based sterilizing agent with the treatment object water, and thus sterilization thereof can be promoted, and in the case where the sterilizing agent residue and the reduction agent are injected, mixing and reaction between the sterilizing agent residue and the reduction agent can be further promoted, whereby detoxication of the sterilizing agent residue can be effectively progressed.

According to the seventeenth and eighteenth aspects of the present invention, the advantageous effects that are offered by the fifteenth and sixteenth aspects of the present invention can be obtained, respectively, in addition to the advantageous effects that are offered by the thirteenth and fourteenth aspects of the present invention, respectively.

Generically, in accordance with the present invention, regardless of whether the seawater is flowing or is stopped in the ballast water piping, the sterilizing agent residue can be detoxicated by the reaction with the reduction agent, and the possibility that the reduction reaction heat generated in the detoxication thereof may have an adverse effect on the sterilizing agent supply device and the components thereof can be eliminated.

Here are additional remarks on the following points.

Additional remark 1: "The chlorine-based sterilizing agent or the component substance thereof' in the present invention that is supplied from the sterilizing agent supply device into the inside of the ballast water piping may be the chlorine-based sterilizing agent or the component substance thereof that is contained in the sterilizing agent residue remaining in the sterilizing agent supply device or the piping route connected thereto. Further, "the injection part" in the present invention to which the first piping is connected and with which "the chlorine-based sterilizing agent or the component substance thereof' that is transferred from the first piping is injected into the inside of the ballast water piping is an injection part for injecting "the chlorine-based sterilizing agent or the component substance thereof' into the inside of the ballast water piping for sterilizing the seawater that is to be contained in the ballast tank as the ballast water (a portion corresponding to "the sterilizing agent injection hole Is" in Japanese Patent JP 5 924 447 B1), however, may also serve as an injection part for injecting the sterilizing agent residue into the inside of the ballast water piping (a portion corresponding to "the residue injection hole Id" in Japanese Patent JP 5 924 447 B1), in other words, may be a portion corresponding to "the sterilizing agent injection hole/residue injection hole Is/Id" in Japanese Patent JP 5 924 447 B1.

Additional remark 2: According to each of the aspects of the present invention, the reduction reaction heat that is to be generated with the sterilizing agent residue being reacted with the reduction agent will not be generated until both substances reach the injection part and thereafter join with each other, and will be generated only after both substances having been injected into the inside of the ballast water piping, thereby not only the sterilizing agent supply device or the piping route connected thereto, but also the reduction agent supply device or the piping route connected thereto will not be adversely affected by reduction reaction heat.

Additional Remark 3: Being based on the above-described advantageous effects 4 and/or 5, using a reduction agent that is high in the concentration of a substance having a reduction action or a substance that has a stronger reduction action as the reduction agent will promote the reaction between the sterilizing agent residue and the reduction agent in the inside of the ballast water piping more effectively, and thus will make the above-described advantageous effect 2 more remarkable.

Additional remark 4: In the case where the seawater in the inside of the ballast water piping is flowing, the stirring action of a mixing device that is mounted in the inside of the ballast water piping will promote contacting or mixing between the sterilizing agent residue and the reduction agent that have been injected into the inside of the ballast water piping, and as a result, detoxication of the sterilizing agent residue. In addition, the higher the concentration of a substance having a reduction action or the stronger the reduction action of a reduction agent, the more effectively, the free available chlorine derived from the sterilizing agent residue (the chlorine-based sterilizing agent or the component substance thereof that is contained in the sterilizing agent residue) can be reduced to thereby curtail or eliminate the free available chlorine, and thus detoxication of the sterilizing agent residue can be promoted. Generically, in the case where it is required to complete the detoxication of the sterilizing agent residue in a shorter time period, it is desirable that the seawater be passed in the inside of the ballast water piping in which a mixing device is mounted, and it is desirable to select a reduction agent that is higher in the concentration of a substance having a reduction action or that has a stronger reduction action. (This does not mean that each of the aspects of the present invention is restricted to the case where the seawater in the inside of the ballast water piping in which a mixing device is mounted is flowing, or the case where a reduction agent that is higher in the concentration of a substance having a reduction action or that has a stronger reduction action is used. Each of the aspects of the present invention also offers the advantageous effects thereof even in the case where the seawater in the inside of the ballast water piping is stopped, or in the case where a reduction agent that is lower in the concentration of a substance having a reduction action.)

Additional Remark 5: With each of the aspects of the present invention, a reduction agent that is highly frequently used in the case where the chlorine-based sterilizing agent or the raw material or the component thereof is a chlorinated isocyanuric acid compound, such as trichloroisocyanuric acid, sodium dichloroisocyanurate or its hydrate, or potassium dichloroisocyanurate is sodium sulfite or its hydrate, sodium thiosulfate or its hydrate, or an aqueous solution of each of these substances. If the reduction agent is an aqueous solution of sodium sulfite or sodium thiosulfate, the fluidity thereof is sufficiently high, and thus the tip of the second piping is not required to be located closer to the cross-sectional center of the ballast water piping than the tip of the first piping. However, regardless of whether the fluidity of the reduction agent is high or low, in the case where it is desired that the reduction agent be easily mixed with the sterilizing agent residue, it is preferable that the tip of the second piping be also located as close to the cross-sectional center as the tip of the first piping.

### Brief Description of the Drawings

FIG. 1 is a schematic block diagram of a ballast water treatment apparatus according to a first embodiment of the present invention;
FIG. 2(A) is a detailed drawing for an injection part of the ballast water treatment apparatus shown in FIG. 1, and FIG. 2(B) is a drawing showing a cross section thereof;
FIGS. 3(A) and 3(B) provide a drawing giving a first example of structure of the injection part of the ballast water treatment apparatus shown in FIG. 1, FIG. 3(A) being a sectional view in a plane including a central axis line of the ballast water piping, and FIG. 3(B) being a sectional view in a plane at right angles to the central axis line;
FIGS. 4(A) and 4(B) provide a drawing giving a second example of structure of the injection part of the ballast water treatment apparatus shown in FIG. 1, FIG. 4(A) being a sectional view in a plane including a central axis line of the ballast water piping, and FIG. 4(B) being a sectional view in a plane at right angles to the central axis line;
FIGS. 5(A) and 5(B) provide a drawing giving a third example of structure of the injection part of the ballast water treatment apparatus shown in FIG. 1, FIG. 5(A) being a sectional view in a plane including a central axis line of the ballast water piping, and FIG. 5(B) being a sectional view in a plane at right angles to the central axis line;
FIGS. 6(A) and 6(B) provide a drawing giving a fourth example of structure of the injection part of the ballast water treatment apparatus shown in FIG. 1, FIG. 6(A) being a sectional view in a plane including a central axis line of the ballast water piping, and FIG. 6 (B) being a sectional view in a plane at right angles to the central axis line;
FIG. 7 provides a drawing giving a fifth example of structure of the injection part of the ballast water treatment apparatus shown in FIG. 1, being a sectional view in a plane including a central axis line of the ballast water piping;
FIG. 8 is a schematic block diagram of a ballast water treatment apparatus according to a second embodiment of the present invention;
FIG. 9(A) is a schematic block diagram of a ballast water treatment apparatus according to a third embodiment of the present invention and FIG. 9(B) is a drawing showing a variation for the return piping route in FIG. 9(A);
FIG. 10 is a schematic block diagram of a ballast water treatment apparatus according to a fourth embodiment of the present invention; and
FIG. 11(A) to FIG. 11(D) provide explanation drawings for the configuration and operational mods of a ballast water treatment apparatus according to a fifth embodiment of the present invention, FIG. 11(A) being a schematic block diagram of the apparatus, FIG. 11 (B) to FIG. 11(D) illustrating different operational modes of the apparatus shown in FIG. 11(A), FIG. 11(B) illustrating the operational mode of "operation of sterilizing treatment in intake", FIG. 11(C) that of "operation of sterilizing agent residue treatment", and FIG. 11(D) that "operation of reduction treatment in discharge".

### Best Mode for Carrying Out the Invention

Hereinbelow, embodiments of the present invention will be explained in detail with reference to the attached drawings when needed. In the attached drawings, the components that are the same as, equivalent to, or common to some others will be provided with the same symbols, the repeated explanation thereof being omitted. Needless to say, the present invention is not limited to the embodiments that are illustrated with reference to the drawings.

Prior to description of the embodiments of the present invention, the terms to be used will be explained.

In the following explanation of the present invention and the embodiments thereof, the meanings or acceptations of the terms that are used shall be as follows, unless otherwise defined.
(1) "Chlorine-based chemical agent" refers to a chemical agent that, when dissolved into water as a solvent thereof, is disproportionated in the aqueous solution, thereby releasing free available chlorine having an sterilizing action or generates a substance being able to release the free available chlorine, and in the present invention, may be "solid" or "liquid". "Solid" means that a certain substance takes a form of powder, granule, tablet, or any other form of solid body at room temperature, and in the present invention, "the chlorine-based chemical agent" need not be "solid".
   Typical examples of "solid chlorine-based chemical agent" are trichloroisocyanuric acid, sodium dichloroisocyanurate and its hydrate, potassium dichloroisocyanurate, and the like. "Chlorine-based sterilizing agent" refers to a chemical agent that performs sterilization, utilizing a sterilizing action possessed by the free available chlorine, and a typical example thereof is an aqueous solution of a chlorine-based chemical agent.
(2) "Reduction agent" is a chemical agent that, regardless of whether it is solid or not, is used to receive an electron from another substance, and in the relation to the chlorine-based sterilizing agent, it refers to a substance that is used to reduce the free available chlorine derived from a chlorine-based sterilizing agent or its component substance. Typical examples of reduction agent are sodium sulfite or its hydrate, sodium thiosulfate or its hydrate, and an aqueous solution of each of these substances.
(3) "Ballast water piping" is a ballast water piping for passing the seawater taken in from outboard toward a ballast tank or, a piping that conFIGS. at least a part of the ballast water piping, regardless of whether it is passing the seawater taken in from outboard toward the ballast tank, or regardless of whether the seawater is flowing or is stopped.
(4) "Seawater" that is subject to the sterilizing treatment in intake, which is performed by sterilization thereof with a sterilizing agent as part of the ballast water treatment prior to being contained in the ballast tank as ballast water in a marine vessel, includes brackish water or fresh water, so long as such water is that to be contained in the ballast tank as the ballast water.

### First Embodiment of the present invention

### 1. Ballast water treatment apparatus

### 1.1 System configuration

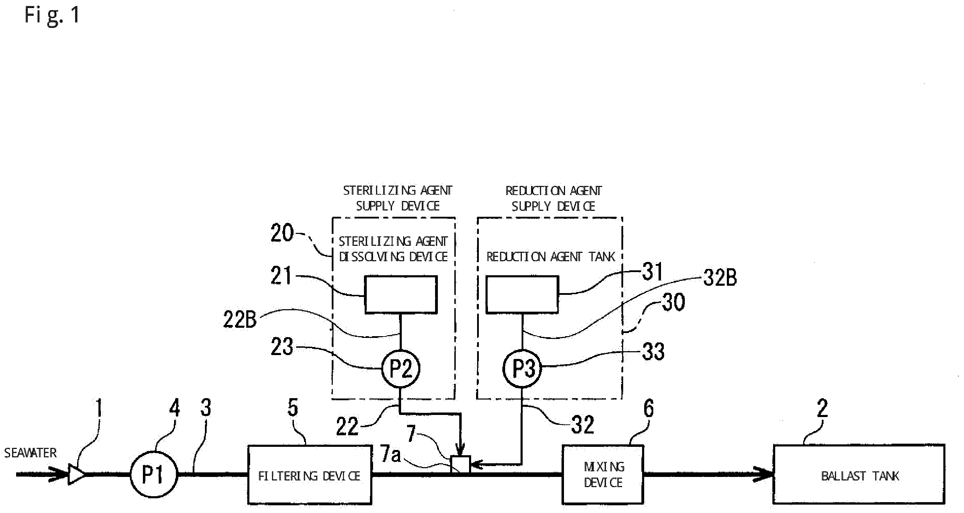

FIG. 1 is a schematic block diagram of a ballast water treatment apparatus according to a first embodiment of the present invention.

In FIG. 1, a marine vessel that is provided with the ballast water treatment apparatus in accordance with the present invention includes a water intake or sea chest 1, which takes in seawater from outboard as ballast water, and a ballast tank 2, which contains the ballast water or is filled therewith, the sea chest 1 and the ballast tank 2 being connected to each other with a ballast water piping 3.

The ballast water piping 3 is provided with a ballast pump 4 (P1) for feeding the ballast water taken in from the sea chest 1 toward the ballast tank 2; a filtering device 5 for removing the foreign matters and plankton in the ballast water by filtration thereof; an injection part 7 for injecting the chlorine-based sterilizing agent supplied from a later-described sterilizing agent supply device 20 into the ballast water after the filtration; and a mixing device 6 for mixing the injected chlorine-based sterilizing agent with the ballast water.

To the injection part 7, which is provided for the ballast water piping 3, the sterilizing agent supply device 20 is connected to inject the chlorine-based sterilizing agent into the inside of the ballast water piping 3 to thereby cause the seawater in the inside of the ballast water piping 3 to be subjected to the sterilizing treatment in intake. The sterilizing agent supply device 20 includes a sterilizing agent dissolving device 21, which dissolves the chlorine-based chemical agent as a raw material into the water, thereby producing a chlorine-based sterilizing agent, which is an aqueous solution of the chlorine-based chemical agent, and a piping route 22B, which is connected to the sterilizing agent dissolving device 21 for passing the chlorine-based sterilizing agent discharged from the sterilizing agent dissolving device 21, the piping route 22B including a sterilizing agent pump 23 (P2) for discharging the chlorine-based sterilizing agent toward the ballast water piping 3.

The sterilizing agent dissolving device 21 includes a dissolving tank (not shown) (hereinafter to be called "the dissolving tank S"), and is configured such that it receives the solid chlorine-based chemical agent and fresh water supplied from the outside thereof with the dissolving tank S, dissolving the solid chlorine-based chemical agent into the fresh water within the dissolving tank S to produce an aqueous solution of the chlorine-based chemical agent, urging the aqueous solution of the chlorine-based chemical agent discharged from the dissolving tank S with the sterilizing agent pump 23 (P2) to deliver it as the chlorine-based sterilizing agent through the piping route 22B connected to the dissolving tank S, and further injecting it into the inside of the ballast water piping 3 from the injection part 7 (exactly, an opening part 7a, which is provided for the injection part 7) through a first piping 22 and a valve 22A.

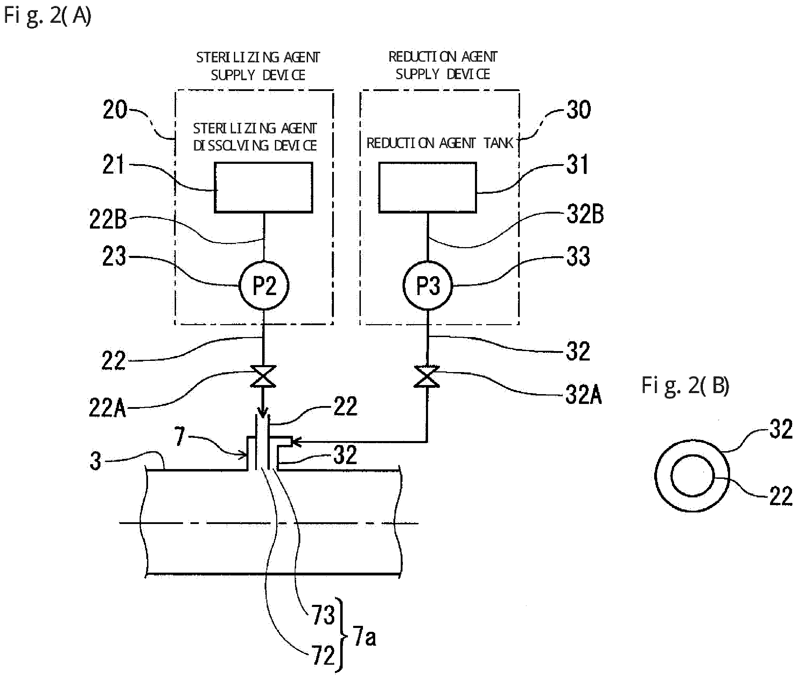

Between the sterilizing agent pump 23 (P2) and the injection part 7, the first piping 22 is connected. The first piping 22 can be considered as a part of the piping route 22B, however, it can also be considered as a piping connected to the end part of the piping route 22B in order to extend the piping route 22B toward the injection part 7. Either way, the sterilizing agent supply device 20 is connected to the injection part 7 through the first piping 22 connected thereto. To the first piping 22, a valve 22A (not shown in FIG. 1) is mounted between the sterilizing agent pump 23 (P2) and the injection part 7 (see FIG. 2).

In the first embodiment, in the sterilizing treatment in intake, in the process of feeding the seawater taken in from outboard through the sea chest 1 in the ballast water piping 3 toward the ballast tank 2 with the ballast pump 4 (P1), the seawater is filtered with the filtering device 5; for the seawater after the filtration, the chlorine-based sterilizing agent supplied from the sterilizing agent supply device 20 is injected into the inside of the ballast water piping 3 from the injection part 7 through the first piping 22; the seawater into which the chlorine-based sterilizing agent has been injected is stirred by means of the mixing device 6 to mix the seawater with the chlorine-based sterilizing agent; and the seawater after the sterilizing agent injection is contained in the ballast tank 2 as the ballast water.

A typical example of chlorine-based sterilizing agent used in the sterilizing treatment in intake is an aqueous solution of a chlorine-based chemical agent containing free available chlorine having oxidizability. The aqueous solution of a chlorine-based chemical agent can be prepared by mixing a chlorine-based chemical agent liquid at room temperature with water or diluting it with water, or by dissolving a chlorine-based chemical agent solid at room temperature into water.

After completion of the sterilizing treatment in intake, a treatment in which at least a part of the unused chlorine-based sterilizing agent or the component substance thereof (in other words, the sterilizing agent residue) that has remained in the inside of the sterilizing agent supply device 20 (including the dissolving tank S and the piping route 22B provided for the sterilizing agent dissolving device 21) or the first piping 22 or the valve 22A connected thereto is urged with the sterilizing agent pump 23 (P2) as it is or together with water (preferably fresh water) charged from the upstream side of the sterilizing agent pump 23 (P2) (preferably the dissolving tank S) for washing the inside of the sterilizing agent supply device 20 or the same as stated above connected thereto, and injected from the injection part 7 into the inside of the ballast water piping 3 through the first piping 22 (this treatment hereinafter may be called "the residue removing treatment") is performed.

As described above, the injection part 7 is an injection hole through which, in the sterilizing treatment in intake, the chlorine-based sterilizing agent supplied from the sterilizing agent supply device 20 is injected into the inside of the ballast water piping 3, and also an injection hole through which, in the residue removing treatment, the sterilizing agent residue remaining in the inside of the sterilizing agent supply device 20 or the piping route connected thereto is injected into the inside of the ballast water piping 3, thus being a portion equivalent to "the sterilizing agent injection hole also serving as residue injection hole Is/Id" in Japanese Patent No. 5924447.

After completion of the sterilizing treatment in intake or when supply of the chlorine-based sterilizing agent to the seawater to be contained in the ballast tank 2 as the ballast water is stopped, there exists the sterilizing agent residue in the inside of the sterilizing agent supply device 20 or the piping route connected thereto (in accordance with the definition thereof, including not only the piping, but also the devices, such as a pump, a valve, a tank, and a measuring instrument, being mounted thereto) (particularly, in the liquid-contact area of the sterilizing agent supply device 20 or the piping route connected thereto with the chlorine-based sterilizing agent). If the sterilizing agent residue is left, generation, sedimentation or solidification of a deposit, resulting from concentration thereof due to the evaporation of the moisture will be caused, which can lead to an operation failure that is attributable to the sterilizing agent residue. In addition, depending upon the material of the piping, corrosion thereof may be caused. Further, depending upon the type of the chlorine-based chemical agent, which is the raw material of the chlorine-based sterilizing agent (for example, in the case where the main component of the chlorine-based chemical agent is sodium dichloroisocyanurate), the sterilizing agent residue can provide a source of generation of chlorine-containing gas, thereby the working environment may be degraded due to the chlorine-containing gas generated. If any of these problems occurs, the reduction treatment in discharge may be adversely affected.

On the other hand, the residue removing treatment is a treatment to remove the sterilizing agent residue that has remained in the inside of the sterilizing agent supply device 20 or the piping route connected thereto (particularly, in the liquid-contact area of the sterilizing agent supply device 20 or the piping route connected thereto with the chlorine-based sterilizing agent) from the remaining location to another location (in the ballast water piping 3), and therefore, by implementing it, generation of an operation failure attributable to the sterilizing agent residue can be prevented or reduced, progress of corrosion of the piping can be suppressed, and even in the case where there is a possibility that chlorine-containing gas may be generated, resulting in degradation of the working environment, the possibility can be obviated. Further an ill effect on the reduction treatment in discharge, which is to be subsequently performed, can also be suppressed.

At the time of the residue removing treatment, the seawater in the ballast water piping 3 may be stopped or be flowing. In addition, the sterilizing agent residue includes at least a part of at least one of (a) a substance that is produced by concentration of at least a part of the unused chlorine-based sterilizing agent or the component substance thereof, (b) an aqueous solution or a liquid substance that is produced by mixing of a chlorine-based chemical agent, which is the raw material of the chlorine-based sterilizing agent, with water, and (c) a mixture of (a) and (b).

In this first embodiment, there is provided a 30, which supplies the reduction agent to the seawater that is passed in the ballast water piping 3.

The reduction agent supply device 30 includes a reduction agent tank 31, which contains the reduction agent, and a piping route 32B, which is connected to the reduction agent tank 31 to pass the reduction agent discharged from the reduction agent tank 31, and the piping route 32B includes a reduction agent pump 33 (P3), which discharges the reduction agent toward the ballast water piping 3.

Between the reduction agent pump 33 (P3) and the injection part 7, a second piping 32 is connected. The second piping 32 can be considered as a part of the piping route 32B, however, it can also be considered as a piping connected to the end part of of the piping route 32B in order to extend the piping route 32B toward the injection part 7. Either way, the reduction agent supply device 30 is connected to the injection part 7 through the second piping 32 connected thereto. To the second piping 32, a valve 32A (not shown in FIG. 1) is mounted between the reduction agent pump 33 (P3) and the injection part 7 (see FIG. 2(A)).

The reduction agent supply device 30 is configured to urge the reduction agent discharged from the reduction agent tank 31 with the reduction agent pump 33 (P3); delivers it through the piping route 32B connected to the reduction agent tank 31; and further, injects it into the inside of the ballast water piping 3 from the second piping 32 and valve 32A through the injection part 7 (exactly, the opening part 7a, which is provided for the injection part 7).

The reduction agent supplied from the reduction agent supply device 30 through the second piping 32 and injected into the inside of the ballast water piping 3 from the injection part 7 is contacted or mixed, and as a result thereof, reacted with the sterilizing agent residue injected from the same injection part 7 from the sterilizing agent supply device 20 through the first piping 22, thereby the free available chlorine derived from the sterilizing agent residue being curtailed or eliminated, and thus the sterilizing agent residue being detoxicated.

The reduction agent supply device 30 is sufficient in a device for injecting the reduction agent to detoxicate the sterilizing agent residue in the residue removing treatment, and it may be a device specialized for use in the residue removing treatment to inject the reduction agent to detoxicate the sterilizing agent residue or it may also serve as a device for use in the reduction treatment in discharge that injects the reduction agent into the ballast water before discharging the ballast water taken in from the ballast tank 2 and injected with the sterilizing agent to outboard.

The structure of the injection part 7 and examples thereof will be later-described separately (see FIGS. 2(A) and 2(B) to FIG. 7).

### 1.2 Operation of Apparatus

Next, the ballast water treatment apparatus according to the first embodiment of the present invention will be explained.

### <1> Operation of sterilizing treatment in intake

In the operation of sterilizing treatment in intake that is conducted by the ballast water treatment apparatus, the seawater taken in from outboard through the sea chest 1 is fed toward the ballast tank 2 with the ballast pump 4 (P1) in the ballast water piping 3, and in the process of water feeding, the seawater is filtered by the filtering device 5; for the seawater after the filtration, the chlorine-based sterilizing agent supplied from the sterilizing agent supply device 20 is injected into the inside of the ballast water piping 3 from the injection part 7 through the first piping 22; and after the seawater injected with the chlorine-based sterilizing agent having been stirred with the mixing device 6, the seawater after the sterilizing agent injection is contained in the ballast tank 2 as the ballast water. Thereby, the ballast tank 2 is filled with the ballast water that has been injected with the chlorine-based sterilizing agent. After completion of the sterilizing treatment in intake, the supply of the chlorine-based sterilizing agent from the sterilizing agent dissolving device 21 in the sterilizing agent supply device 20 is stopped.

The chlorine-based sterilizing agent to be injected into the inside of the ballast water piping 3 from the injection part 7 is an aqueous solution of a chlorine-based chemical agent that can be produced by dissolving a solid chlorine-based chemical agent into water in the dissolving tank S provided for the sterilizing agent dissolving device 21. Injection of the chlorine-based sterilizing agent into the inside of the ballast water piping 3 from injection part 7 is performed by urging the aqueous solution of the chlorine-based chemical agent discharged from the sterilizing agent dissolving device 21 (particularly the dissolving tank S) through the piping route 22B with the sterilizing agent pump 23 (P2), and delivering it into the inside of the ballast water piping 3 from the opening part 7a provided for the injection part 7 through the first piping 22. Stirring of the seawater injected with the chlorine-based sterilizing agent with the mixing device 6 promotes the mixing of the seawater with the chlorine-based sterilizing agent, and thus the sterilization of the seawater with the chlorine-based sterilizing agent.

### <2> Operation of residue removing treatment

In the operation of residue removing treatment that is conducted by the ballast water treatment apparatus, after the completion of the sterilizing treatment in intake or after the supply of chlorine-based sterilizing agent to the seawater to be contained in the ballast tank 2 as the ballast water having been stopped, regardless of whether the ballast pump 4 (P1) is in operation or has completed its operation, and regardless of whether the seawater in the ballast water piping 3 is stopped or is flowing, the sterilizing agent residue that has remained in the inside of the sterilizing agent supply device 20 or the first piping 22 or the valve 22A connected thereto (particularly, the liquid-contact area of the sterilizing agent supply device 20 or the first piping 22 or the valve 22A connected thereto with the chlorine-based sterilizing agent) is injected into the inside of the ballast water piping 3 from the injection part 7 through the first piping 22, as it is or together with the water (preferably the fresh water) for washing the inside of the sterilizing agent supply device 20 or the same as stated above connected thereto that has been charged from the upstream side of the sterilizing agent pump 23 (P2) (preferably, the dissolving tank S provided for the sterilizing agent dissolving device 21), being urged with the sterilizing agent pump 23 (P2).

The injection of the sterilizing agent residue into the inside of the ballast water piping 3, in other words, the start of the operation of residue removing treatment is performed within 2 hours, preferably within 1 hour, more preferably as soon as practically possible, after the completion of the sterilizing treatment in intake or after the supply of the chlorine-based sterilizing agent to the seawater to be contained in the ballast tank 2 as the ballast water having been stopped

Simultaneously with the sterilizing agent residue being injected into the inside of the ballast water piping 3 from the injection part 7 through the first piping 22 or just before or a certain hour before the supply thereof, the reduction agent supplied from the reduction agent supply device 30 is injected into the ballast water piping 3 from the same injection part 7 through the second piping 32. Thereby, regardless of whether the seawater is is flowing or stopped in the ballast water piping, a chance of mutually contacting or mixing, and as a result thereof, reaction of the sterilizing agent residue with the reduction agent in the ballast water piping is secured, thereby the sterilizing agent residue being finally detoxicated.

In transferring from the operation of sterilizing treatment in intake to that of residue removing treatment, it is preferable that the transfer be carried out consecutively without stopping the operation of the sterilizing agent pump 23 (P2). This is because, if the sterilizing agent pump 23 (P2) is stopped (even if the stopping is temporal), there is the possibility that the chlorine-based sterilizing agent and other substance may be left somewhere in the sterilizing agent supply device 20 or the piping route connected thereto.

Injection of the reduction agent into the inside of the ballast water piping 3 is carried out regardless of whether the ballast pump 4 (P1) is in operation or after completion of the operation, and regardless of whether the seawater in the ballast water piping 3 is stopped or is flowing. However, in order to detoxicate the sterilizing agent residue more effectively in the ballast water piping 3, it is desirable that the seawater in the ballast water piping 3 be flowing, and is more desirable that the mixing device 6 be installed in the ballast water piping 3 on the downstream side of the injection part 7.

After the sterilizing agent residue and the reduction agent having been injected into the seawater in the ballast water piping 3 from the injection part 7, regardless of whether the seawater is stopped or is flowing in the ballast water piping 3, in the procedure [a1], the seawater is left to be contained in the ballast water piping 3 without being fed to the ballast tank 3, and thereafter is discharged to outboard at the time of the operation of reduction treatment in discharge, or, in the procedure [a2], is fed to the ballast tank 2 to be contained as a part of the ballast water, and thereafter is discharged to outboard at the time of the operation of reduction treatment in discharge.

In the case of taking the above procedure [a1], the seawater may be circulated temporally or over a long period of time (at the latest, until just before the operation of reduction treatment in discharge) with the ballast water piping 3 or a piping route of circulation type or in the shape of a closed loop that is configured, including the ballast water piping 3. In the case of taking the above procedure [a2], when the seawater injected with the sterilizing agent residue and the reduction agent is to be fed to the ballast tank 2, it may be fed to the ballast tank 2 through the ballast water piping 3, or fed to the ballast tank 2 through another piping that can be connected to the ballast water piping 3 by opening a valve.

### <3> Operation of reduction treatment in discharge

In the operation of reduction treatment in discharge with the ballast water treatment apparatus, the ballast water (the seawater that has been injected with the sterilizing agent) is taken in from the ballast tank 2, and by injecting the reduction agent into the ballast water, the free available chlorine contained in the ballast water is curtailed or eliminated to a level at which the ballast water is allowed to be discharged outboard, and thereafter, the ballast water, thus detoxicated, is discharged to outboard. The free available chlorine is derived from the chlorine-based sterilizing agent or the component substance thereof that has been used for sterilization of the seawater in the operation of sterilizing treatment in intake.

In the case where the free available chlorine contained in the ballast water taken in from the ballast tank 2 is at a level low enough to allow outboard water discharge without injecting the reduction agent into the ballast water, the ballast water treatment apparatus will not carry out the operation of reduction treatment in discharge.

### 1.3 Merits of apparatus

The ballast water treatment apparatus according to the first embodiment of the present invention is configured and operated as described above, and thus it has at least one of the following merits 1 to 7.

Merit 1: The sterilizing agent residue is not contacted or mixed with the reduction agent until it reaches the injection part 7, and thus will not generate reduction reaction heat. Accordingly, the sterilizing agent supply device 20 and the piping route connected thereto will not be adversely affected by reduction reaction heat.

For the same reason as described above, the reduction agent supply device 30 and the piping route connected thereto (including the second piping 32 and the valve 32A) will not also be adversely affected by the reduction reaction heat.

Merit 2: The reduction reaction heat that is generated by the sterilizing agent residue being reacted with the reduction agent in the ballast water piping 3 will not have an ill effect on the sterilizing agent supply device 20 and the piping route connected thereto, since the internal volume of the ballast water piping 3 is large, and in addition, the seawater that always exists in the ballast water piping 3 will exert the cooling action.

For the same reason as described above, the reduction reaction heat will not have an ill effect also on the reduction agent supply device 30 and the piping route connected thereto.

Merit 3: Since both substances of the sterilizing agent residue and the reduction agent are injected into the inside of the ballast water piping 3 from the injection part 7, regardless of whether the ballast pump 4 (P1) is in operation or after the completion of the operation, and regardless of whether the seawater is flowing or is stopped in the ballast water piping, both substances can be put close to or contacted with each other immediately after the injection thereof, and also after the injection, mutual contacting or mixing of both substances, and a chance of reaction with each other resulting therefrom in the ballast water piping 3 can be secured, whereby the sterilizing agent residue can finally be detoxicated.

Merit 4: The sterilizing agent residue is not reacted with the reduction agent until it reaches the injection part 7, and thus will not generate reduction reaction heat, and therefore, both of the sterilizing agent supply device 20 and the reduction agent supply device 30, and the piping routes connected thereto will not be adversely affected by reduction reaction heat, whereby, as the reduction agent, that having a high concentration of a substance that provides a reduction action or a substance giving a stronger reduction action can be used.

Merit 5: The reduction reaction heat that is generated by the sterilizing agent residue being reacted with the reduction agent in the ballast water piping 3 will not have an ill effect on both of the sterilizing agent supply device 20 and the reduction agent supply device 30, and the piping routes connected thereto; therefore, as the reduction agent, a reduction agent having a high concentration of a substance that provides a reduction action or a substance giving a stronger reduction action can be used.

If, on the basis of the above-described merit 4 and/or merit 5, a reduction agent having a high concentration of a substance that provides a reduction action or a substance giving a stronger reduction action is used as the reduction agent, the reaction between both substances of the sterilizing agent residue and the reduction agent in the ballast water piping is more effectively progressed, thereby the above-described merit 2 being made more remarkable.

Generically, with the ballast water treatment apparatus according to the first embodiment of the present invention, having has the above-described merits, the sterilizing agent removal treatment (including the treatment for detoxication of the sterilizing agent residue), which follows the sterilizing treatment in intake, is carried out without being adversely affected by the reduction reaction heat that is generated by the reaction between the sterilizing agent residue and the reduction agent, regardless of whether the ballast pump 4 (P1) is in operation or after completion of the operation, and regardless of whether the seawater is flowing or is stopped in the ballast water piping, and occurrence of problems that are typified by an operation failure attributable to the sterilizing agent residue is prevented or the possibility thereof is minimized, thereby the ballast water treatment, including the reduction treatment in discharge, that follows the sterilizing agent removal treatment being normally conducted.

### 2. Injection part provided for ballast water treatment apparatus

### 2.1 Role of injection part in residue removing treatment

In the case where both substances of the sterilizing agent residue and the reduction agent are injected into the inside of the ballast water piping 3 in the residue removing treatment, if the injection is performed from the same injection part 7, both substances can be introduced into the inside of the ballast water piping 3 while being put close to or contacted with each other, regardless of whether, in that injection, the seawater is flowing or is stopped in the ballast water piping 3, whereby mutual contacting, mixing, and reaction of the sterilizing agent residue and the reduction agent in the ballast water piping 3, and as a result thereof, curtailment or elimination of the free available chlorine derived from the sterilizing agent residue can be promoted, and thus, detoxication of the sterilizing agent residue can be finally promoted.

Such a detoxication of the sterilizing agent residue can be further promoted by devising the structure of the injection part 7.

Then, the structure of the injection part 7 provided for the ballast water treatment apparatus according to the first embodiment of the present invention and examples thereof will be explained with reference to FIGS. 2(A) and 2(B) to FIG. 7.

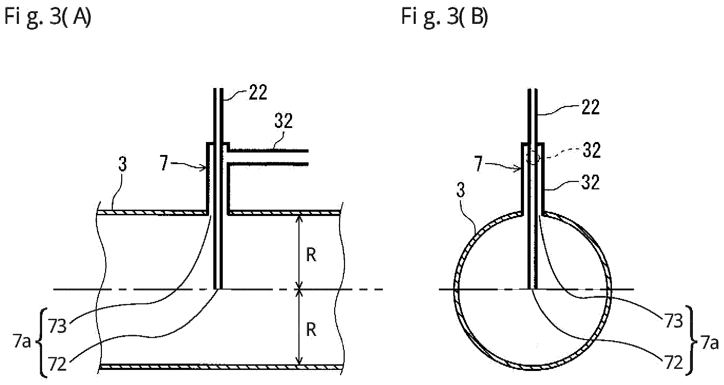

In FIGS. 2(A) and 2(B), the valve 22A and the valve 32A are shown, however, in FIGS. 3(A) and 3(B) to FIG. 7, showing of them is omitted.

### 2.2 Structure of injection part and examples thereof

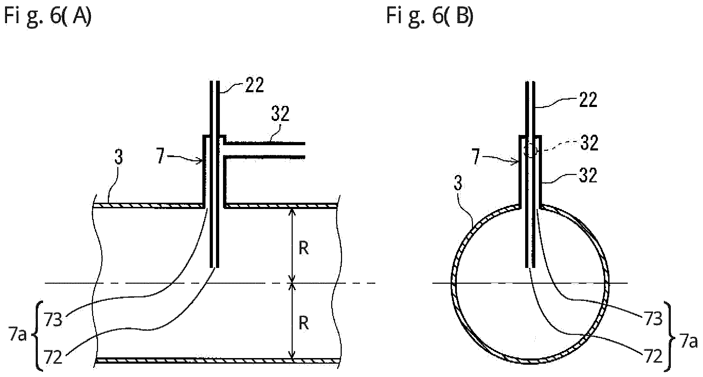

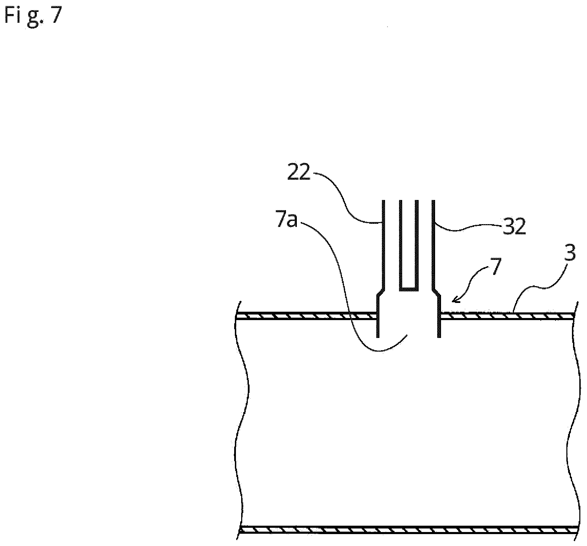

The injection part 7 is mounted to the ballast water piping 3, being connected with the first piping 22, which transfers the chlorine-based sterilizing agent or the sterilizing agent residue to the inside of the ballast water piping 3 and the second piping 32, which transfers the reduction agent to the inside of the ballast water piping 3, and is provided with one or more than one opening part 7a, which opens toward the ballast water piping 3. The injection part 7 shown in FIG. 7 is provided with one opening part 7a, while the injection part 7 shown in FIGS. 2(A) and 2(B) to FIGS. 6(A) and 6(B) is provided with a plurality of opening parts 7a (72, 73). None of the first piping 22 and the second piping 32 is connected to the other on the upstream side of the injection part 7.

The injection part 7 may have a double pipe structure with which one of at least a part of the first piping 22 and at least a part of the second piping 32 forms an inner pipe of the other (see FIGS. 2(A) and 2(B) to FIGS. 6(A) and 6(B)). According to this structure, there is provided an appearance that includes a single injection part for the ballast water piping 3, and the injection part 7, to which both the first piping 22 and the second piping 32 are connected, can be simply configured. However, the injection part 7 is not limited to that having the double pipe structure. The injection part shown in FIGS. 2(A) and 2(B) to FIGS. 6(A) and 6(B) is that having the double pipe structure, while the injection part shown in FIG. 7 is that having no double pipe structure.

In the case where the injection part 7 has a double pipe structure with which the first piping 22 provides an inner pipe, while the second piping 32 provides an outer pipe, if the second piping 32 is extended into the inside of the ballast water piping 3 more than the first piping 22, the reduction agent that is to be injected into the inside of the ballast water piping 3 from an opening part 73 of the second piping 32 will surround an opening part 72 at the tip of the first piping 22 or enter the inside of the opening part 72, and thus may cause unexpected faults.

On the other hand, in the case where the injection part 7 has a double pipe structure with which the first piping 22 provides an outer pipe, while the second piping 32 provides an inner pipe, if the first piping 22 is extended into the inside of the ballast water piping 3 more than the second piping 32, the chlorine-based sterilizing agent or the sterilizing agent residue that is to be injected into the inside of the ballast water piping 3 from the opening part 72 of the first piping 22 will surround the opening part 73 of the second piping 32 or enter the inside of the opening part 73, and thus may cause unexpected faults.

Accordingly, in the case where the injection part 7 has a double pipe structure, in order to avoid an unexpected failure, it is preferable that the double pipe structure be designed such that the second piping 32 is not extended into the inside of the ballast water piping 3 more than the first piping 22 (see FIGS. 2(A) and 2(B) to FIGS. 6(A) and 6(B)).

The injection part 7 shown in FIGS. 2(A) and 2(B) has a double pipe structure with which the first piping 22 provides an inner pipe, while the second piping 32 providing an outer pipe. With this structure, either of the opening parts 72 and 73 at the tips of both pipes 22 and 23 is located in the vicinity of the internal wall place in the ballast water piping 3. In the case where the internal wall of the ballast water piping 3 has been removed in order to mount the injection part 7 to the ballast water piping 3, the wording of "the internal wall place in the ballast water piping 3" means the place in the internal wall of the ballast water piping 3 that would exist without having been lost, if the injection part 7 was not provided (the same applies hereinafter).

Hereinafter, in the case where a piping is protruded into ballast water piping 3, if the shortest distance measured from the internal wall place in the ballast water piping 3 to the location of the tip of the piping along the direction of the radius of the cross section of the ballast water piping 3 is defined as the "elongation length", the respective elongation lengths of the first piping 22 and the second piping 32 in the injection part 7 shown in FIG. 2(A) is approximately zero.

The injection part 7 shown in FIGS. 3(A) and 3(B) has a double pipe structure with which, the first piping 22 provides an inner pipe, while the second piping 32 providing an outer pipe, as with the injection part 7 shown in FIGS. 2(A) and 2(B), however, unlike that shown in FIGS. 2(A) and 2(B), the opening part 72 at the tip of the first piping 22 is located in the vicinity of the cross-sectional center of the ballast water piping 3.

Hereinbelow, if the inner radius of the ballast water piping 3 is R, the elongation length of the first piping 22 in the injection part 7 shown in FIGS. 3(A) and 3(B) is approximately R, while that of the second piping 32 is approximately zero.

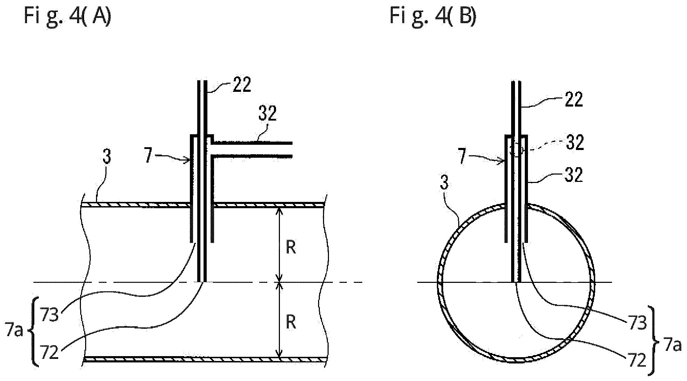

The injection part 7 shown in FIGS. 4(A) and 4(B) has a double pipe structure with which, the first piping 22 provides an inner pipe, while the second piping 32 providing an outer pipe, as with the injection part 7 shown in FIGS. 2(A) and 2(B), and the opening part 72 at the tip of the first piping 22 is extended to the vicinity of the cross-sectional center of the ballast water piping 3, as with the injection part 7 shown in FIGS. 3(A) and 3(B), however, unlike that shown in FIGS. 3(A) and 3(B), the second piping 32 is protruded into the inside of the ballast water piping 3, and the opening part 73 at the tip thereof is located in a location where the elongation length is larger than zero and smaller than R.

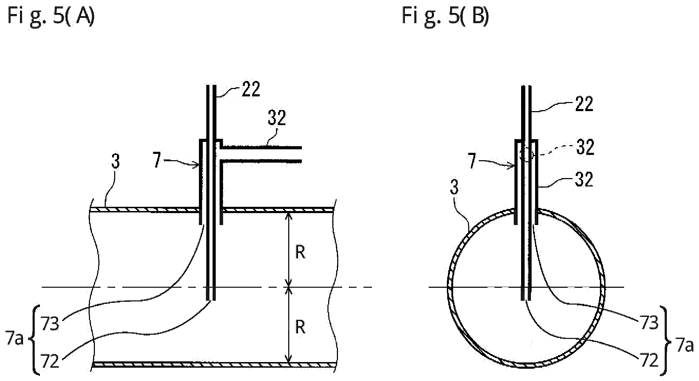

The injection part 7 shown in FIGS. 5(A) and 5(B) has a double pipe structure with which, the first piping 22 provides an inner pipe, while the second piping 32 providing an outer pipe, as with the injection part 7 shown in FIGS. 2(A) and 2(B), and the second piping 32 is protruded into the inside of the ballast water piping 3, and the opening part 73 at the tip thereof is located in a location where the elongation length is larger than zero and smaller than R, as with that shown in FIGS. 4(A) and 4(B), however, unlike that shown in FIGS. 4(A) and 4(B), the opening part 72 at the tip of the first piping 22 is located in a location beyond the cross-sectional center of the ballast water piping 3 where the elongation length is larger than R and smaller than 2R.

The injection part 7 shown in FIGS. 6(A) and 6(B) has a double pipe structure with which, the first piping 22 provides an inner pipe, while the second piping 32 providing an outer pipe, as with the injection part 7 shown in FIGS. 2(A) and 2(B), however, unlike that shown in FIGS. 3(A) and 3(B), the opening part 72 at the tip of the first piping 22 is located in a location that is closer to the internal wall place in the ballast piping 3 than the cross-sectional center of the ballast water piping 3. The elongation length for the second piping 32 in the injection part 7 shown in FIGS. 6(A) and 6(B) is approximately zero, while the elongation length for the first piping 22 is larger than zero and smaller than R.

The injection part 7 shown in FIG. 7 does not have a double pipe structure as shown in FIGS. 2(A) and 2(B) to FIGS. 6(A) and 6(B), either of the first piping 22 and the second piping 32 being not protruded into the inside of the ballast water piping 3, and each being connected to the same injection part 7, and is configured such that the sterilizing agent residue, which has reached the injection part 7 through the first piping 22, and the reduction agent, which has reached the injection part 7 through the second piping 32, flow into each other, and then are injected into the inside of the ballast water piping 3 from a single or common opening part 7a.

This injection part 7 is designed to have such a geometry that the sterilizing agent residue and the reduction agent, having been injected, will not be stopped in the inside of the injection part 7, although they are put close to and contacted with each other to some extent, and the internal volume thereof is basically small.

With the injection part 7 shown in FIGS. 3(A) and 3(B) to FIGS. 6(A) and 6(B), the first piping 22 may be bent toward the downstream direction at near the tip thereof, thus being disposed such that the opening part 72 is faced to the downstream direction (such that the direction of discharge of the chlorine-based sterilizing agent and the sterilizing agent residue is in parallel with the axial direction of the ballast water piping 3). Alternatively, the first piping 22 may be kept to be a straight tube as shown in FIGS. 3(A) and 3(B) to FIGS. 6(A) and 6(B), while the tip thereof having such a form that it is largely opened toward the downstream side, being cut away slantwise.

### 2.3 Merits of injection part

### <1> General merits

To the injection part 7 shown in each of FIGS. 2(A) and 2(B) to FIG. 7, the first piping 22 and the second piping 32 are connected separately, but being put close to each other, and thus both substances of the sterilizing agent residue, which has reached the injection part 7 through the first piping 22, and the reduction agent, which has reached the injection part 7 through the second piping 32, are contacted or put close to each other, being injected into the inside of the ballast water piping 3. Therefore, if such injection part 7 is used, regardless of whether, in injection of both substances into the inside of the ballast water piping 3, the seawater is flowing or stopped in the ballast water piping 3, both substances can be injected, being contacted or mixed with each other; also after the injection, mutual contacting or mixing of both substances, and the resulting reaction therebetween, can be maintained in the ballast water piping 3; as a result therefrom, minimization or elimination of the free available chlorine derived from the sterilizing agent residue can be promoted; and finally detoxication of the sterilizing agent residue can be promoted.

Particularly, if the injection part 7 having a double pipe structure shown in each of FIGS. 2(A) and 2(B) to FIGS. 6(A) and 6(B) is used, when the sterilizing agent residue and the reduction agent are injected into the inside of the ballast water piping 3 from the opening part 72 at the tip of the first piping 22 and the opening part 73 at the tip of the second piping 23, respectively, there will be provided a state in which the former, the sterilizing agent residue, is wrapped by the latter, the reduction agent, whereby the sterilizing agent residue can be sufficiently mixed with the reduction agent to be reacted therewith, and thus detoxication of the sterilizing agent residue can be more easily or effectively carried out.

This injection part 7 shown in FIG. 7 is designed to have such a geometry that the sterilizing agent residue and the reduction agent will not be stopped in the inside of the injection part 7, and the internal volume thereof is basically small. Therefore, the sterilizing agent residue and the reduction agent will not be stagnated, being kept excessively contacted or mixed with each other in the inside of the injection part 7 before being moved into the inside of the ballast water piping 3, thereby excessive reduction reaction heat will not be generated. In addition, even if reduction reaction heat is generated, since there is normally provided the seawater in the ballast water piping 3, the cooling action by the seawater is performed, and thus the reduction reaction heat generated will not have an adverse effect on the sterilizing agent supply device 20 or the piping route connected thereto.

### <2> In case where seawater is flowing at a relatively high flow velocity inside of ballast water piping

Since the opening part 7a (72 and 73) (in FIGS. 2(A) and 2(B) to FIGS. 6(A) and 6(B)) and the same 7a (in FIG. 7), being provided for the injection part 7, are each exposed to the inside of the ballast water piping 3, in the case where the seawater is flowing at a relatively high flow velocity, the opening part 7a (72 and 73) and the same 7a will be subjected to a negative pressure that acts so as to absorb the substance in the inside of the injection part 7 from the inside of the injection part 7 toward the outside (the inside of the ballast water piping 3). If this negative pressure is utilized, it is made easier to move the substance in the inside of the injection part 7 to the outside.

At the respective tips of the first piping 22 and the second piping 32 in the injection part 7 having a double pipe structure shown in FIGS. 2(A) and 2(B), there is generated a negative pressure. However, since the opening part 72 at the tip of the first piping 22 and the opening part 73 at the tip of the second piping 32 are located in virtually the same location in the vicinity of the internal wall place in the ballast water piping 3, the negative pressure that is received by the respective tips of the first piping 22 and the second piping 32 from the inside of the ballast water piping 3 is relatively small. Therefore, in the case where the fluidity of the sterilizing agent residue is low (for example, sedimentation or solidification of the sterilizing agent residue has been progressed), the negative pressure cannot be easily utilized for moving the sterilizing agent residue from the inside of the first piping 22 to the inside of the ballast water piping 3. This can also be said about the injection part 7 shown in FIG. 7 (because, in this injection part 7, the opening part 7a, which is common to the first piping 22 and the second piping 32, is located in the vicinity of the internal wall place in the ballast water piping 3).

Accordingly, for the injection parts 7 that are shown in FIGS. 2(A) and 2(B) and FIG. 7, respectively, movement of the sterilizing agent residue from the inside of the first piping 22 to the inside of the ballast water piping 3 is made exclusively by urging the sterilizing agent residue with the pump 23 (extruding it from the inside of the first piping 22 to the inside of the ballast water piping 3).

On the other hand, in the case where the fluidity of the reduction agent is high (for example, the reduction agent is liquid at room temperature), regardless of whether the injection part 7 is that shown in FIGS. 2(A) and 2(B) or FIG. 7, the negative pressure can be utilized relatively easily for moving the reduction agent from the inside of the second piping 32 to the inside of the ballast water piping 3.

Also at the respective tips of the first piping 22 and the second piping 32 of the injection part 7 having a double pipe structure shown in FIGS. 3(A) and 3(B), there is generated a negative pressure that acts so as to absorb the substance in the respective insides of the first piping 22 and the second piping 32 into the inside of the ballast water piping 3. However, the negative pressure that is received by the tip of the first piping 22 from the seawater flowing in the ballast water piping 3 is relatively high (if the bore diameter of the ballast water piping 3, the quantity and flow velocity of the seawater, and other conditions are the same as those in the case of FIGS. 2(A) and 2(B), the negative pressure that is received by the tip of the first piping 22 from the seawater flowing in the ballast water piping 3 in the case of FIGS. 3(A) and 3(B) is higher than that in the case of FIGS. 2(A) and 2(B)).
In addition, the negative pressure that is received by the tip of the first piping 22 from the seawater flowing in the inside of the ballast water piping 3 is higher than the negative pressure that is received by the tip of the second piping 32 from the seawater flowing in the ballast water piping 3.

Accordingly, in the case where the fluidity of the sterilizing agent residue is low, the negative pressure received from the inside of the ballast water piping 3 can be utilized more easily than in the case of FIGS. 2(A) and 2(B) for moving the sterilizing agent residue from the inside of the first piping 22 to the inside of the ballast water piping 3. On the other hand, in the case where the fluidity of the reduction agent is high, the negative pressure received from the inside of the ballast water piping 3 can be utilized relatively easily for moving the reduction agent from the inside of the second piping 32 to the inside of the ballast water piping 3.

If the bore diameter of the ballast water piping 3, the quantity and flow velocity of the seawater, and other conditions are the same, there is no significant difference in negative pressure received by the tip of the first piping 22 from the seawater flowing in the ballast water piping 3 between the case in FIGS. 3(A) and 3(B) and the case in FIGS. 4(A) and 4(B). This is because there is no significant difference in location of the opening part 72 at the tip of the first piping 22 between the case in FIGS. 3(A) and 3(B) and the case in FIGS. 4(A) and 4(B).

On the other hand, if the bore diameter of the ballast water piping 3, the quantity and flow velocity of the seawater, and other conditions are the same, the negative pressure received by the tip of the second piping 32 from the seawater flowing in the ballast water piping 3 in the case of FIGS. 4(A) and 4(B) is higher than that in the case of FIGS. 3(A) and 3(B). This is because the location of the opening part 73 at the tip of the second piping 32 in the case of FIGS. 4(A) and 4(B) is closer to the cross-sectional center of the ballast water piping 3 than that in the case of FIGS. 3(A) and 3(B).

Thus, in the case where the fluidity of the sterilizing agent residue is low, the negative pressure received from the inside of the ballast water piping 3 can be utilized with no significant difference in degree of ease of utilization between the case in FIGS. 4(A) and 4(B) and the case in FIGS. 3(A) and 3(B) for moving the sterilizing agent residue from the inside of the first piping 22 to the inside of the ballast water piping 3 (but can be more easily utilized, compared to the case of FIGS. 2(A) and 2(B)). On the other hand, the negative pressure received from the inside of the ballast water piping 3 can be more easily utilized in the case of FIGS. 4(A) and 4(B) than in the case of FIGS. 3(A) and 3(B) for moving the reduction agent from the inside of the second piping 32 to the inside of the ballast water piping 3.

If the bore diameter of the ballast water piping 3, the quantity of the seawater, and other conditions are the same, the negative pressure received by the tip of the first piping 22 from the seawater flowing in the ballast water piping 3 in the case of FIGS. 5(A) and 5(B) is slightly lower than that in the case of FIGS. 3(A) and 3(B). This is because the location of the opening part 72 at the tip of the first piping 22 in the case of FIGS. 3(A) and 3(B) is closer to the cross-sectional center of the ballast water piping 3 than that in the case of FIGS. 5(A) and 5(B).

On the other hand, if the bore diameter of the ballast water piping 3, the quantity and flow velocity of the seawater, and other conditions are the same, the negative pressure received by the tip of the second piping 32 from the seawater flowing in the ballast water piping 3 in the case of FIGS. 5(A) and 5(B) is slightly higher than that in the case of FIGS. 3(A) and 3(B). This is because the location of the opening part 73 at the tip of the second piping 32 in the case of FIGS. 5(A) and 5(B) is closer to the cross-sectional center of the ballast water piping 3 than that in the case of FIGS. 3(A) and 3(B).

Therefore, in the case where the fluidity of the sterilizing agent residue is low, the negative pressure received by the ballast water piping 3 cannot be utilized more easily in the case of FIGS. 5(A) and 5(B) than in the case of FIGS. 3(A) and 3(B) for moving the sterilizing agent residue from the inside of the first piping 22 to the inside of the ballast water piping 3 (but can be utilized more easily than in the case of FIGS. 2(A) and 2(B)). On the other hand, the negative pressure received from the inside of the ballast water piping 3 can be utilized more easily than in the case of FIGS. 3(A) and 3(B) for moving the reduction agent from the inside of the second piping 32 to the inside of the ballast water piping 3.

If the bore diameter of the ballast water piping 3, the quantity of the seawater, and other conditions are the same, the negative pressure received by the tip of the first piping 22 from the seawater flowing in the ballast water piping 3 in the case of FIGS. 6(A) and 6(B) is slightly lower than that in the case of FIGS. 3(A) and 3(B). This is because the location of the opening part 72 at the tip of the second piping 22 in the case of FIGS. 3(A) and 3(B) is closer to the cross-sectional center of the ballast water piping 3 than that in the case of FIGS. 6(A) and 6(B).

On the other hand, if the bore diameter of the ballast water piping 3, the quantity and flow velocity of the seawater, and other conditions are the same, there is no significant difference in negative pressure received by the tip of the second piping 32 from the seawater flowing in the ballast water piping 3 between the case in FIGS. 3(A) and 3(B) and the case in FIGS. 6(A) and 6(B). This is because there is no significant difference in location of the opening part 73 at the tip of the second piping 32 between the case in FIGS. 3(A) and 3(B) and the case in FIGS. 6(A) and 6(B).

Therefore, in the case where the fluidity of the sterilizing agent residue is low, the negative pressure received from the inside of the ballast water piping 3 cannot be utilized more easily in the case of FIGS. 6(A) and 6(B) than in the case of FIGS. 3(A) and 3(B) for moving the sterilizing agent residue from the inside of the first piping 22 to the inside of the ballast water piping 3 (but can be utilized more easily than in the case of FIGS. 2(A) and 2(B)). On the other hand, the negative pressure received from the inside of the ballast water piping 3 can be utilized with no significant difference in degree of ease of utilization between the case in FIGS. 6(A) and 6(B) and the case in FIGS. 3(A) and 3(B) for moving the reduction agent from the inside of the second piping 32 to the inside of the ballast water piping 3.

In the case where the ballast water piping 3 has a size of 450A to 600A, considering the velocity of the seawater that actually flows in the ballast water piping 3, if the tip of the first piping 22 is located away from the cross-sectional center of the ballast water piping 3 in a direction passing through the cross-sectional center or in a direction opposite thereto within the range of a distance of half the cross-sectional radius (in other words, the elongation length for the first piping 22 is within the range of 0.5 R to 1.5 R), the negative pressure received by the tip of the first piping 22 will be large enough to absorb the sterilizing agent residue in the state in which the fluidity is maintained to the inside of the ballast water piping 3.

This means that, if the fluidity of the sterilizing agent residue is lowered, it is difficult to utilize the negative pressure, and thus it is desirable that the residue removing treatment be carried out practically as soon as after the completion of the sterilizing treatment in intake (at the latest within one hour after the completion of the sterilizing treatment in intake).

The reduction agent that is highly frequently used when the raw material of the chlorine-based sterilizing agent is a solid chlorine-based chemical agent (for example, when it is an chlorinated isocyanuric acid compound, such as trichloroisocyanuric acid, sodium dichloroisocyanurate or its hydrate, or potassium dichloroisocyanurate) is sodium sulfite or its hydrate, sodium thiosulfate or its hydrate, or an aqueous solution thereof. If the reduction agent is an aqueous solution of sodium sulfite or sodium thiosulfate, the fluidity thereof is sufficiently high, and thus it is unnecessary that the tip of the second piping 32 be located in a location closer to the cross-sectional center of the ballast water piping than the tip of the first piping 22.

However, in the case where it is desired that the reduction agent be easily mixed with the sterilizing agent residue, regardless of whether the fluidity of the reduction agent is high or low, it is preferable that the tip of the second piping 32 be also located in a location closer to the cross-sectional center of the ballast water piping.

### <3> In case where seawater in inside of ballast water piping is stopped or is flowing at a relatively low flow velocity

If the seawater in the inside of the ballast water piping 3 is stopped or is flowing at a relatively low flow velocity, the negative pressure received by the respective tips of the first piping 22 and second piping 23 from the inside of the ballast water piping 3 is zero or low, and thus, as originally schemed, moving of the sterilizing agent residue from the inside of the first piping 22 to the inside of the ballast water piping 3 is performed by urging the sterilizing agent residue with the pump 23 (extruding it into the inside of the ballast water piping 3 with the pump 23), and moving of the reduction agent from the inside of the second piping 32 to the inside of the ballast water piping 3 is by urging the reduction agent with the pump 33 (extruding it into the inside of the ballast water piping 3 with the pump 33).

In this case, any of the injection parts 7 shown in FIGS. 2(A) and 2(B) to FIG. 7 may be used. This is because, if the sterilizing agent residue and the reduction agent are injected from the same injection part 7 with the pumps 23 and 33 into the inside of the ballast water piping 3, regardless of any of the injection parts 7 shown in FIGS. 2(A) and 2(B) to FIG. 7 is used, the purpose of mutual contacting or mixing, and as a result thereof, reaction of both substances can be effectively achieved, and as specific reasons for this, the following ones [b1] and [b2] can be considered; [b1], with the sterilizing agent residue and the reduction agent being injected from the same injection part 7, both substances can be injected into the inside of the ballast water piping 3 in the state in which they are contacted with or put close to each other, and [b2], with both substances being injected into the inside of the ballast water piping 3 with the pumps 23 and 33, the seawater in the inside of the ballast water piping 3 can be stirred, and mutual contacting or mixing, and as a result thereof, reaction of both substances can be promoted.

However, in the case where it can be considered that uniform distribution of the sterilizing agent residue in the inside of the ballast water piping 3 helps in promoting the reaction with the reduction agent, it is preferable that any of the injection parts 7 shown in FIGS. 3(A) and 3(B) to FIGS. 6(A) and 6(B) be used rather than the injection parts 7 shown in FIGS. 2(A) and 2(B) and FIG. 7. This is because, in the case of the injection parts 7 shown in FIGS. 3(A) and 3(B) to FIGS. 6(A) and 6(B), the sterilizing agent residue injected from the opening part 72 at the tip of the first piping 22 into the inside of the ballast water piping 3 is urged with the pump 23, thereby being collided with the internal wall of the ballast water piping 3 to generate a turbulence in the seawater in the inside of the ballast water piping 3, and thus being well mixed with the seawater in the inside of the ballast water piping 3, resulting in being uniformly distributed in the inside of the ballast water piping 3 relatively in a short time period.

Even in the case where any of the injection parts 7 shown in FIGS. 2(A) and 2(B) to FIG. 7, it is preferable that, as an operating method [c1], both substances of the sterilizing agent residue and the reduction agent be simultaneously injected into the inside of the ballast water piping 3, or, as an operating method [c2], first, the reduction agent be injected into the inside of the ballast water piping 3 to be in the seawater in the inside of the ballast water piping 3, and then the sterilizing agent residue be injected toward the location where the reduction agent exists. This is because, if the sterilizing agent residue is injected into the inside of the ballast water piping 3 before injection of the reduction agent, in the case where the sterilizing agent residue is not uniform in denseness (particularly, in the case where a solidified matter is contained therein), it is difficult to cause a sufficient reaction between the sterilizing agent residue and the reduction agent in a shorter time period.

In the case where any of the injection parts 7 shown in FIG. 2 to FIG. 7 is used, the operation described in the above operating method [c2] is more preferable than that in the above operating method [c1]. This is because, after the reduction agent having been caused to exist in the seawater in the inside of the ballast water piping 3, injection of the sterilizing agent residue toward the location where the reduction agent exists, mutual contacting or mixing between the sterilizing agent residue and the reduction agent will be promoted more effectively.

In the case where any of the injection parts 7 shown in FIGS. 2(A) and 2(B) to FIG. 7 is used, a reduction agent having a high concentration of a substance that provides a reduction action or a substance giving a stronger reduction action can be used as the reduction agent (refer to [Merit 4] and [Merit 5] in 1.3 above). By using such a reduction agent, the free available chlorine derived from the sterilizing agent residue can be curtailed or eliminated, in other words, detoxication of the sterilizing agent residue can be promoted or made thoroughly.

At a plant simulating the ballast water treatment apparatus according to the first embodiment of the present invention (see FIG. 1), with the injection pressure by the pump 23, the injection pressure by the pump 33, and the concentration and quantity of the reduction agent having been selected such that they are equivalent to the actual operation conditions, an experiment in which a substance corresponding to the sterilizing agent residue after the lapse of 1 hour after the completion of a treatment corresponding to the sterilizing treatment in intake was injected from the injection part 7 into the inside of the ballast water piping 3 with the pump 23 through the first piping 22, and the reduction agent was injected from the same injection part 7 into the inside of the ballast water piping 3 with the pump 33 through the second piping 32 was conducted for pipings simulating the two types of ballast water pipings 3 of 450A and 600A.

It was confirmed that, if any of the injection parts 7 shown in FIGS. 3(A) and 3(B) to FIGS. 6(A) and 6(B) (that are limited to those with which the elongation length for the first piping 22 is within the range of 0.5 R to 1.5 R) was used, in the range between 4 R on the upstream side of the injection part 7 and 4 R on the downstream side thereof, the free available chlorine derived from the sterilizing agent residue was curtailed down to a level at which outboard discharge of the ballast water is allowable. The measurement of the free available chlorine was performed by mounting a total residual oxidizability substance concentration measuring device (hereinbelow, to be called as a TRO concentration meter) to the experimental piping simulating the ballast water piping 3.

### Second Embodiment of the present invention

Besides from the results of the above-mentioned experiment that was conducted for the two types of ballast water pipings 3 of 450A and 600A, there is a case where it is desirable to further enhance the effect of mixing the seawater that is existing in the inside of the ballast water piping 3 with the chlorine-based sterilizing agent and the reduction agent. For example, in the state in which solidification of the sterilizing agent residue has been progressed, even if it is injected into the inside of the ballast water piping 3 from the injection part 7, it will not uniformly be distributed in the seawater, and thus even if the reduction agent is injected, there is the possibility that the sterilizing agent residue may remain in the inside of the ballast water piping 3 for a long period of time, being left unreacted with the reduction agent that has been injected. In order to achieve, in a shorter time period, detoxication of the sterilizing agent residue that is left unreacted with the reduction agent, it is required to enhance the above-mentioned mixing effect. A second embodiment of the present invention will be helpful in such a case.

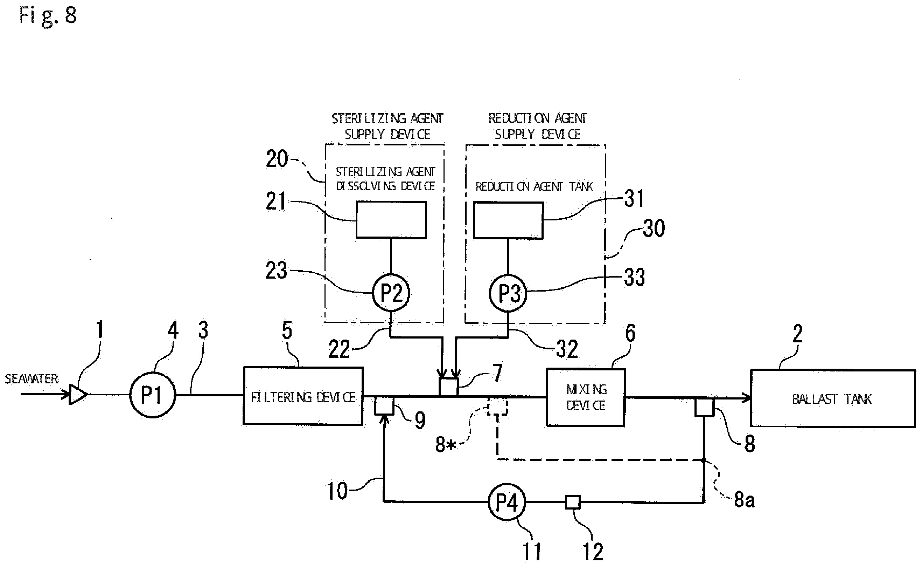

FIG. 8 is a schematic block diagram of a ballast water treatment apparatus according to the second embodiment of the present invention. The ballast water treatment apparatus shown in this FIG. 8 is the same as the ballast water treatment apparatus shown in FIG. 1 except that a return piping route 10 is installed in the ballast water piping 3. The return piping route 10 includes a takeout part 8 in a location between the mixing device 6 and the ballast tank 2, a return part 9 in a location between the filtering device 5 and the injection part 7, a piping that connects between the takeout part 8 and the return part 9, allowing the seawater to flow from the takeout part 8 to the return part 9, and a return pump 11 (P4) and a total residue oxidizability substance concentration measuring device (hereinbelow, to be called as a TRO concentration meter) 12, which are mounted to the piping. Therefore, the seawater in the inside of the ballast water piping 3 is extracted from the takeout part 8 by the return pump 11 (P4) and is discharged into the return part 9 through the TRO concentration meter 12 to be returned to the inside of the ballast water piping 3.

The takeout part 8 may be located in a location between the injection part 7 and the mixing device 6. In that case, the return piping route 10 includes a takeout part 8*, which is located in the above-mentioned location, a piping location 8a, a TRO concentration meter 12, a return pump 11, and a return part 9 in a location between the filtering device 5 and the injection part 7.

In this second embodiment, regardless of whether the seawater in the inside of the ballast water piping 3 is flowing or is stopped, the seawater in the inside of the ballast water piping 3 is circulated between the ballast water piping 3 and the return piping route 10. As a result thereof, the sterilizing agent residue and the reduction agent, having been injected into the inside of the ballast water piping 3, are heavily stirred in the course of flowing together with the seawater, being mixed with each other.

Even if solidification of the sterilizing agent residue has been progressed, it is heavily stirred, thereby being uniformly distributed in the seawater, and uniformly reacted with the reduction agent. Accordingly, this ballast water treatment apparatus according to the second embodiment has the merit that, in the operation of sterilizing agent residue treatment, it can complete the detoxication of the sterilizing agent residue more effectively or in a shorter time period.

In addition, with this second embodiment, in the operation of sterilizing treatment in intake, the chlorine-based sterilizing agent, which has been injected into the inside of the ballast water piping 3, and the seawater in the inside of the ballast water piping 3 are heavily mixed with each other. Accordingly, this ballast water treatment apparatus according to the second embodiment also has the merit that, in the operation of sterilizing treatment in intake, it promotes the sterilization of the seawater, which is flowing in the inside of the ballast water piping 3 toward the ballast tank 2, and finally the ballast water to be contained in the ballast tank 2, thus completing it more effectively or in a shorter time period.

If the seawater in the inside of the ballast water piping 3 is circulated between the ballast water piping 3 and the return piping route 10 such that it is passed through the mixing device 6, the seawater is more heavily stirred than if not passed through the mixing device 6. Accordingly, it is preferable that the takeout part 8 be located in a location between the mixing device 6 and the ballast tank 2 (in other words, in a location on the downstream side of the mixing device 6) rather than is located in a location between the injection part 7 and the mixing device 6 (in other words, in a location on the upstream side of the mixing device 6).

In the operation of sterilizing treatment in intake, if the TRO concentration meter 12, which is mounted to the return piping route 10, is used to measure the concentration of the free available chlorine in the seawater that is passed in the return piping route 10, and on the basis of the result of the measurement, the quantity of supply of the chlorine-based sterilizing agent from the sterilizing agent supply device 20 to the seawater in the inside of the ballast water piping 3 is controlled, the injection of the chlorine-based sterilizing agent into the ballast water to be contained in the ballast tank 2 can be controlled such that it is not excessive or the concentration of the chlorine-based sterilizing agent is held to within a predetermined range.

A pump provided for a TRO concentration meter can be used instead of the return pump 11 (P4) to configure the return piping route 10. In this case, the need for adding a return pump separately is eliminated, and thus such configuration is rational, allowing an increase in equipment cost to be avoided.

An oxidation-reduction potential (ORP) measuring device can be substituted for the TRO concentration meter. In this case, if the oxidation-reduction potential measuring device is provided with a pump, the pump can be used in place of the return pump 11 (P4) to configure the return piping route 10, the need for adding a return pump separately is eliminated, and thus such configuration is rational, allowing an increase in equipment cost to be avoided.

The TRO concentration meter 12 may be installed in series with the piping constituting the return piping route 10 as shown in FIG. 8, however, as later described, it may be installed in parallel with the piping constituting the return piping route 10.

### Third Embodiment of the present invention

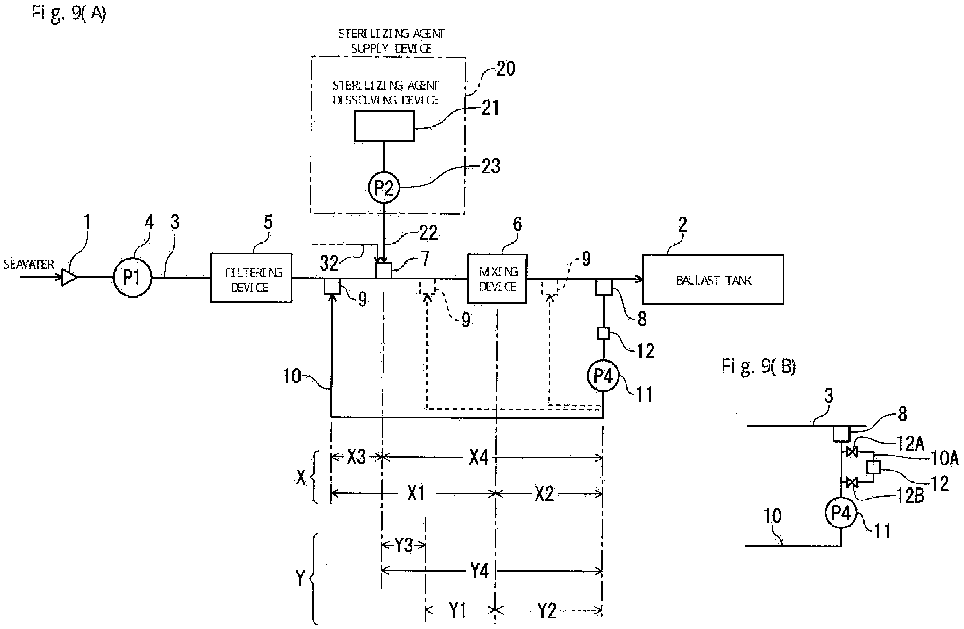

FIGS. 9(A) and 9(B) is a schematic block diagram of a ballast water treatment apparatus according to a third embodiment of the present invention. In FIGS. 9(A) and 9(B), for simplification of the drawing, depiction of the reduction agent supply device 30 is omitted.

In this FIGS. 9(A) and 9(B), the location to which the return piping route 10 is returned, in other words, the location of the return part 9 is can be set on the downstream side of the ballast pump 4 (P1), and with respect to the respective locations of the mixing device 6 and the injection part 7, on the upstream side or the downstream side. For example, the following settings (i) to (iii) of the location of the return part 9 can be considered;
(i) as shown in FIG. 9(A), using a solid line, the return part 9 is provided at a location between the filtering device 5 and the injection part 7,
(ii) as shown in FIG. 9(A), using a thick dotted line, the return part 9 is provided at a location between the injection part 7 and the mixing device 6 (on the inlet side thereof), and
(iii) as shown in FIG. 9(A), using a thin dotted line, the return part 9 is provided at a location between the mixing device 6 (on the outlet side thereof) and the takeout part 8. In every case, it is preferable that the relationship in mutual distance among the injection part 7, the takeout part 8, the return part 9 and the mixing device 6 be properly set. As denoted in FIG. 9(A), with the distance in the case of the above-mentioned (i) being assumed to be X, with the distance in the case of the above-mentioned (ii) being assumed to be Y, and with the bore diameter of the ballast water piping 3 being assumed to be D, each of the distances X1 to X4 and each of the distances Y1 to Y4 can be set as follows:

For X,
X1: (0.1 to 10)D
X2: (2 to 10)D
X3: (0.1 to 10)D
X4: (2.2 to 10)D
and
for Y,
Y1: (0.1 to 5)D
Y2: (2 to 10)D
Y3: (0.1 to 5)D
Y4: (2.2 to 15)D.

The reasons why each distance is set as described above are as follows:
(a) If the respective distances X1, X2, Y1, and Y2 among the return part 9, the takeout part 8 and the mixing device 6 of the return piping route 10 are smaller than the lower limit value, a turbulence of the ballast water flow at the inlet and outlet of the mixing device 6 will make the takeout and return of the ballast water returned by the return pump 11 (P4) unstable, resulting in occurrence of an obstacle.
(b) If the respective distances X1, X2, Y1, and Y2 are larger than the upper limit value, the length of the return piping route 10 will become excessively long, resulting in an increased pressure loss, thereby a return pump 11 (P4) having a greater capacity being required, and thus the equipment cost being increased.
(c) If the respective distances X3, X4, Y3, and Y4 among the return part 9, the takeout part 8 and the injection part 7 of the return piping route 10 are smaller than the lower limit value, under the influence of the current of the return ballast water that flows in from the return piping route 10 or flows out thereto, the injection of the sterilizing agent that is supplied from the injection part 7 is made unstable, resulting in occurrence of an obstacle.
(d) If the respective distances X3, X4, Y3, and Y4 are larger than the upper limit value, the length of the return piping route 10 will become excessively long, resulting in an increased pressure loss, thereby a return pump 11 (P4) having a greater capacity being required, and thus the equipment cost being increased.

With this third embodiment, as with the second embodiment, since the return piping route 10 is provided in the ballast water piping 3, the seawater that is flowing or is stopped in the inside of the ballast water piping 3 can be returned from the takeout part 8 on the downstream side of the ballast water piping 3 to the return part 9 on the upstream side thereof, whereby the seawater that exists in the inside of the ballast water piping 3 can be heavily stirred. Accordingly, this ballast water treatment apparatus according to the third embodiment has the merit that, in the operation of sterilizing agent residue treatment, it can complete the detoxication of the sterilizing agent residue more effectively or in a shorter time period. In addition, this ballast water treatment apparatus also has the merit that, in the operation of sterilizing treatment in intake, it can promote sterilization of the seawater, which is flowing in the inside of the ballast water piping 3 toward the ballast tank 2, and finally the ballast water to be contained in the ballast tank 2, thereby completing the sterilization more effectively or in a shorter time period.

With this third embodiment, as with the second embodiment, in the operation of sterilizing treatment in intake, by using the TRO concentration meter 12, which is mounted to the return piping route 10, the quantity of supply of the chlorine-based sterilizing agent from the sterilizing agent supply device 20 to the seawater in the inside of the ballast water piping 3 can be controlled, being based on the result of the measurement with the TRO concentration meter 12. In addition, a pump provided for the TRO concentration meter can be used instead of the return pump 11 (P4) to configure the return piping route 10. And, an oxidation-reduction potential (ORP) measuring device can be substituted for the TRO concentration meter, and if the oxidation-reduction potential measuring device is provided with a pump, the pump can be used instead of the return pump 11 (P4) to configure the return piping route 10.

The TRO concentration meter 12 may be installed in series with the piping constituting the return piping route 10 as shown in FIG. 9(A), however, it may be installed in parallel with the piping. More particularly, as shown in FIG. 9(B), a branch pipe 10A may be provided in parallel with the piping constituting the return piping route 10, the TRO concentration meter 12 being disposed in the branch pipe 10A, with valves 12A and 12B being provided thereacross such that, with the valves 12A and 12B being opened, the concentration of the free available chlorine remaining in the seawater that is flowing in the inside of the branch pipe 10A can be measured with the TRO concentration meter 12.

### Fourth Embodiment of the present invention

A fourth embodiment of the present invention features that a system including the return piping route 10 is unitized.

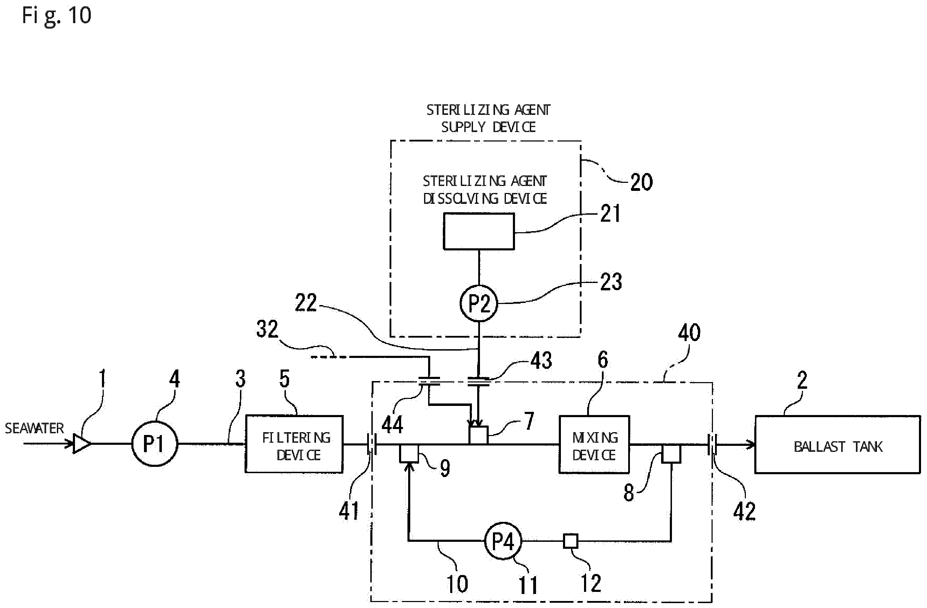

FIG. 10 is a schematic block diagram of a ballast water treatment apparatus according to a fourth embodiment of the present invention. In FIG. 10, for simplification of the drawing, depiction of the reduction agent supply device 30 is omitted.

The ballast water treatment apparatus shown in FIG. 10 includes a piping unit 40. The piping unit 40 is configured such that, by providing a piping system including the return piping route 10 shown in FIG. 9 with flanges 41, 42, 43, and 44 as parts for connecting with devices shown in FIG. 9 that are outside of the piping system, it can be removably connected with the devices. The ballast water piping 3 are provided with flanges that face the flanges 41 and 42, the first piping 22 being provided with a flange that faces the flange 43, and the second piping 32 being provided with a flange that faces the flange 44, and therefore, by making connection and disconnection between flanges, the piping unit 40 can be mounted and removed, respectively.

Accordingly, with this fourth embodiment, even if an existing ballast water treatment apparatus is not provided with a return piping route, simply by connecting the piping unit 40 to the corresponding portions, it can be adapted so as to configure a ballast water treatment apparatus in accordance with the present invention. Therefore, at the time of adapting a ballast water treatment apparatus, the operation therefor can be effectively performed, while, at the time of maintenance, the operation therefor can be simply performed because what is required is only replacing the old piping unit 40 with a new piping unit 40.

The piping unit 40 shown in FIG. 10 is depicted as that corresponding to the ballast water treatment apparatus shown in FIG. 9, however, it is applicable to the ballast water treatment apparatus shown in FIG. 8.

In addition, the piping unit 40 may be unitized with a configuration in which, as shown in FIG. 10, the mixing device 6 is included, however, it may be unitized with a configuration in which the mixing device 6 is not included and replacement of only the mixing device 6 can be separately made. However, if the piping unit 40 is unitized with a configuration in which the mixing device 6 is included, adaptation of the ballast water treatment apparatus can be more effectively performed.

### Fifth Embodiment of the present invention

A fifth embodiment of the present invention relates to a case in which there are provided a plurality of ballast tank. Here, for clarification of explanation, an example in which two ballast tanks are provided will be explained, however, this fifth embodiment is not limited to a case in which there are provided two ballast tanks.

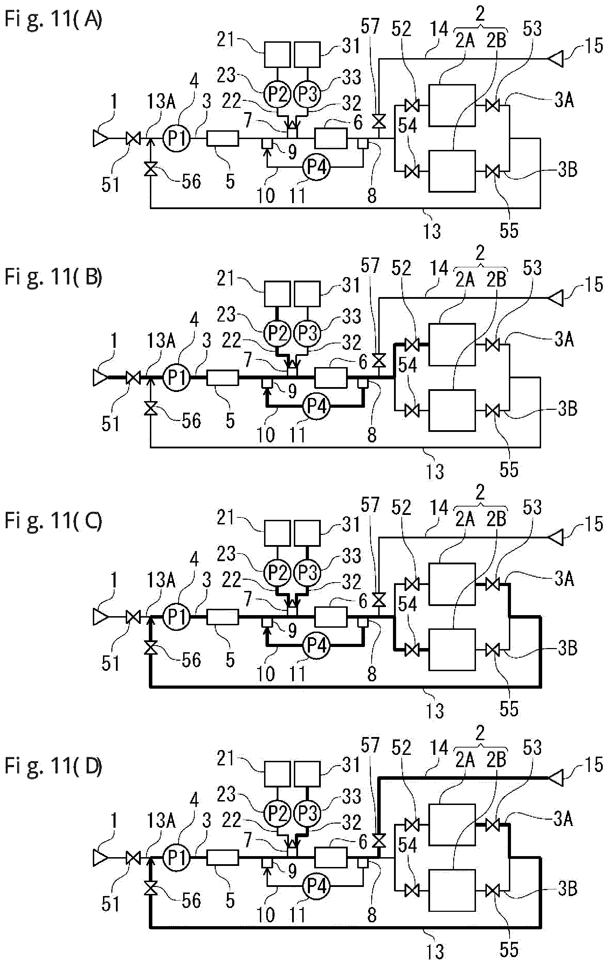

FIGS. 11(A) to 11(D) are drawings for explanation of the configuration and operation of a ballast water treatment apparatus according to a fifth embodiment of the present invention. The configuration of this ballast water treatment apparatus is equivalent to that in which two ballast tanks are disposed in the configuration of the ballast water treatment apparatus according to the second embodiment shown in FIG. 8. Then, in FIGS. 11(A) to 11(D), the components that are common to those shown in FIG. 8 will be provided with the same symbols, the explanation thereof being omitted.

In FIG. 11(A), the ballast tank 2 is comprised of a first ballast tank 2A and a second ballast tank 2B, the first ballast tank 2A and the second ballast tank 2B being installed in parallel with the ballast water piping 3. The injection part 7 is installed in the ballast water piping 3 between the filtering device 5 and the mixing device 6; the takeout part 8 of the return piping route 10 is installed in the ballast water piping 3 on the outlet side of the mixing device 6; and the return part 9 of the return piping route 10 is installed in the ballast water piping 3 between the filtering device 5 and the injection part 7.

The ballast water piping 3 is branched to a first branch pipe 3A and a second branch pipe 3B at a location M on the downstream side of the takeout part 8. The first branch pipe 3A and the second branch pipe 3B are connected to the first ballast tank 2A and the second ballast tank 2B, respectively, being joined to each other at a location N on the downstream side of the first ballast tank 2A and the second ballast tank 2B to form a single pipeline again, and at a location G on the inlet side of the ballast pump 4 (P1) being connected to the ballast water piping 3. In other words, the ballast water piping 3 includes a ballast water return passage 13, which runs from the location M to the location N via the first ballast tank 2A or the second ballast tank 2B, and further is returned from the location N to the location G.

In FIGS. 11(A) to 11(D), a ballast water drainage pipe 14, which is not shown in FIG. 8 to FIG. 10, is shown. The ballast water drainage pipe 14 is connected to the ballast water piping 3 between the takeout part 8 and the location M, being extended to a water drainage hole 15, which is provided on the ship side.

The piping route shown in FIG. 11(A) includes a plurality of valves. More particularly, it is provided with a first valve 51 in the ballast water piping 3 between the sea chest 1 and the location G; a second valve 52 in the first branch pipe 3A between the location M and the ballast tank 2A; a third valve 53 in the first branch pipe 3A between the ballast tank 2A and the location N; a fourth valve 54 in the second branch pipe 3B between the location M and the ballast tank 2B; a fifth valve 55 in the second branch pipe 3B between the ballast tank 2B and the location N; a sixth valve 56 in the ballast water return passage 13 between the location N and the location G; and a seventh valve 57 in the ballast water drainage pipe 14.

By switching to open/close the plurality of valves, the ballast tank 2A or 2B in which the seawater taken in from outboard and passed in the inside of the ballast water piping 3 is to be contained as the ballast water or in which the ballast water to be discharged therefrom into the ballast water return passage 13 has been contained is selected. The ballast water treatment apparatus according to the fifth embodiment of the present invention is operated in the operational mode, i.e., that selected from the operational modes of "operation of sterilizing treatment in intake", "operation of sterilizing agent residue treatment" and "operation of reduction treatment in discharge", as follows:

### <1> Operation of sterilizing treatment in intake

In the case where the seawater taken in from outboard is filled in the first ballast tank 2A as the ballast water, the third valve 53, the fourth valve 54, the sixth valve 56, and the seventh valve 57 are closed and the first valve 51 and the second valve 52 are opened, the sterilizing agent pump 23 (P2) and the return pump 11 (P4) being driven (with the reduction agent pump 33 (P3) being stopped), and the chlorine-based sterilizing agent that has been urged with the sterilizing agent pump 23 (P2) is injected from the injection part 7 into the inside of the ballast water piping 3.

Then, the seawater is passed toward the first ballast tank 2A through a location of the injection part 7 in the route shown with a thick line in FIG. 11(B), and in the course of being passed, the chlorine-based sterilizing agent is injected thereinto, thereby, the seawater, into which the chlorine-based sterilizing agent has been injected, being contained in the first ballast tank 2A through the first branch pipe 3A.

A part of the seawater is taken out from the takeout part 8 in the state in which the chlorine-based sterilizing agent has been injected thereinto in the course of being passed toward the first ballast tank 2A in the inside of the ballast water piping 3, and returned to the ballast water piping 3 from the return part 9 through the return piping route 10, thus a circulating flow being formed. With that circulating flow, the seawater is well stirred with the chlorine-based sterilizing agent to be sufficiently mixed therewith, thereby sterilization of the seawater being promoted.

### <2> Operation of sterilizing agent residue treatment

After the operation of sterilizing treatment in intake on the seawater taken in from outboard having been completed (accordingly the supply of the chlorine-based sterilizing agent from the sterilizing agent dissolving device 21 having been stopped), the sterilizing agent residue remaining in the inside of the sterilizing agent supply device 20 or the piping route connected thereto is removed from the inside of the sterilizing agent supply device 20 or the piping route connected thereto and subjected to a reduction treatment to detoxicate it as soon as possible (preferably within one hour after the stop).

Then, first, a part of the ballast water in the first ballast tank 2A (hereinbelow to be called as "a part of ballast water") is moved to the second ballast tank 2B. Accordingly, the first valve 51, the second valve 52, the fifth valve 55, and the seventh valve 57 are closed, and the third valve 53, the fourth valve 54, and the sixth valve 56 are opened, the sterilizing agent pump 23 (P2) and the reduction agent pump 33 (P3) being driven, thereby the sterilizing agent residue urged with the sterilizing agent pump 23 (P2) (in some instances, together with fresh water separately supplied) being injected from the injection part 7 into the inside of the ballast water piping 3, and the reduction agent urged with the reduction agent pump 33 (P3) being injected into the inside of the ballast water piping 3 from the reduction agent supply device 31.

Then, from the inside of the sterilizing agent supply device 20 or the piping route connected thereto, the sterilizing agent residue is removed. In addition, the part of ballast water is passed toward the second ballast tank 2B through a location of the injection part 7 in the route shown with a thick line in FIG. 11(C), while being returned to the ballast water piping 3 from the location G through the ballast water return passage 13, to be moved to the second ballast tank 2B. In the course of being moved, a part of the part of ballast water is taken out from the takeout part 8 in the state in which the sterilizing agent residue and the reduction agent have been injected thereinto, and returned to the ballast water piping 3 from the return part 9 through the return piping route 10, thereby a circulating flow being formed.

As a result thereof, the sterilizing agent residue and the reduction agent are sufficiently stirred and mixed with each other, the sterilizing agent component in the sterilizing agent residue being reduced, thereby the part of ballast water being contained in the second ballast tank 2B in the state in which the sterilizing agent residue has been sufficiently detoxicated.

### <3> Operation of reduction in water discharge

The ballast water in the second ballast tank 2B is in the state in which the free available chlorine derived from the chlorine-based sterilizing agent and the sterilizing agent residue have been sufficiently reduced to be detoxicated. In such state, the remaining part of the ballast water in the first ballast tank 2A (hereinbelow to be called as "the remaining ballast water") is discharged to outboard. For doing this, the first valve 51, the second valve 52, the fourth valve 54, and the fifth valve 55 are closed, and the third valve 53, the sixth valve 56, and the seventh valve 57 are opened, the sterilizing agent pump 23 (P2) being stopped and the reduction agent pump 33 (P3) being driven, thereby the reduction agent that has been urged with the reduction agent pump 33 (P3) being injected into the inside of the ballast water piping 3 from the reduction agent supply device 31. Then, the remaining ballast water is discharged to outboard in the route shown with a thick line in FIG. 11(D), having been detoxicated with the reduction agent being injected in the course of being moved to the water drainage hole 15 from the ballast discharge pipe 14 through a location of the injection part 7.

The operation of reduction in water discharge may or may not be schemed such that a part of the remaining ballast water is taken out from the takeout part 8 and is returned to the ballast water piping 3 from the return part 9 through the return piping route 10, thereby a circulating flow being formed.

In this way, if the ballast tank 2 is comprised of a plurality of ballast tanks, in the course of the ballast water that has been contained in one ballast tank being moved to another ballast tank at least temporarily, stirring of the ballast water will be progressed. Accordingly, in the case where chlorine-based sterilizing agent has been injected into the ballast water (at the time of making an operation of sterilizing treatment in intake), the sterilization effect is promoted, and in the case where the chlorine-based sterilizing agent or the free available chlorine derived from the sterilizing agent residue has remained in the ballast water (at the time of making an operation of sterilizing agent residue treatment or at the time of making an operation of reduction treatment in discharge), mixing and reaction thereof with the reduction agent that has been injected is progressed, thereby detoxication of the ballast water being promoted.

The above explanation of the operations of the ballast water treatment apparatus according to the fifth embodiment of the present invention has been made, being focused on the first ballast tank 2A, however, it is also applicable as it is to the explanation that is focused on the ballast tank 2B, and further, is also applicable as it is to the explanation that is focused on any one of the ballast tanks, even if the ballast tank 2 is comprised of more than two ballast tanks 2A, 2B, 2C.

The examples of ballast water treatment apparatus shown in FIGS. 11(A) and 11(D) provide an example in which, for ballast water treatment, not only the chlorine-based sterilizing agent, but also the reduction agent is supplied to the seawater, however, the fifth embodiment of the present invention is not limited to these examples. This fifth embodiment includes an example in which only the chlorine-based sterilizing agent is supplied.

The ballast water treatment apparatus shown in any one of FIG. 8 to FIG. 10 may be that in which the ballast tank 2 is comprised of a plurality of ballast tanks, as is the case with the fifth embodiment of the present invention. If such a ballast water treatment apparatus is to be implemented, a location M is provided between the takeout hole 8 and the ballast tank 2 in the ballast water treatment apparatus shown in the one of FIG. 8 to FIG. 10, and on the inlet side of the ballast pump 4 (PI), a location G is set, the configuration from the location M to the ballast tank 2 being replaced with the configuration from the location M to the location N shown in FIGS. 11(A) to 11(D) and between the location N and the location G, a ballast water return passage 13 being newly provided. The operation of a ballast water treatment apparatus shown in any one of FIG. 8 to FIG. 10 with which the ballast tank 2 is comprised of a plurality of ballast tanks can be explained as above on the basis of FIGS. 11(A) to 11(D).

### Conclusion

The present invention is configured such that the chlorine-based chemical agent or the component substance thereof and the reduction agent are injected into the inside of the ballast water piping from the same injection hole through a separate piping, respectively, whereby, in the operation of residue removing treatment, regardless of whether the seawater is flowing or is stopped in the ballast water piping, the residue of the sterilizing agent can be detoxicated through the reaction with the reduction agent, and the possibility of occurrence of an adverse effect due to the reduction reaction heat that is generated in the detoxication can be eliminated. Generically, in accordance with the present invention, a ballast water treatment apparatus that is capable of normally carrying out the ballast water treatment can be implemented.

The present invention is not limited to the embodiments thereof, and the technical scope of the present invention extends to the technology of equivalence. The meaning or interpretation of each term in the present specifications will not hinder the technical scope of the present invention from extending to the technology of equivalence.

### List of Reference Signs

- 2: ballast tank
- 3: ballast water piping
- 4: ballast pump
- 5: filtering device
- 7: injection part
- 8: takeout part
- 9: return part
- 10: return piping route
- 11: return pump
- 12: TRO concentration meter
- 13: ballast water return passage
- 14: ballast water drainage pipe
- 20: sterilizing agent supply device
- 22: first piping
- 23: pump (sterilizing agent pump)
- 30: reduction agent supply device
- 32: second piping
- 33: pump (reduction agent pump)
- 40: piping unit
- 72a: opening part
- 72: opening part
- 73: opening part
- R: inner radius of a ballast water piping.

## Claims

1. A ballast water treatment apparatus for sterilizing ballast water to be contained in a ballast tank in a marine vessel, comprising:
a sterilizing agent supply device that supplies an aqueous solution of a chlorine-based chemical agent as a chlorine-based sterilizing agent into the inside of a ballast water piping that transfers seawater, brackish water, fresh water or other water taken in from outboard toward the ballast tank,
a reduction agent supply device that supplies a reduction agent that is reacted with the chlorine-based sterilizing agent or the component substance thereof into the inside of the ballast water piping,
a first piping to which the sterilizing agent supply device is connected and that transfers the chlorine-based sterilizing agent or the component substance thereof toward the inside of the ballast water piping,
a second piping to which the reduction agent supply device is connected and that transfers the reduction agent toward the inside of the ballast water piping, and
an injection part to which the first piping and the second piping are connected, the injection part injecting the chlorine-based sterilizing agent or the component substance thereof that is transferred from the first piping into the inside of the ballast water piping, and injecting the reduction agent that is transferred from the second piping into the inside of the ballast water piping,
the chlorine-based sterilizing agent or the component substance thereof being not mixed with the reduction agent before reaching the injection part through the first piping, and being mixed with the reduction agent after being supplied into the inside of the ballast water piping from the injection part.

2. The ballast water treatment apparatus according to claim 1, wherein the chlorine-based sterilizing agent or the component substance thereof is at least a part of that which has remained in the sterilizing agent supply device or the inside of the first piping without being used for sterilization of the ballast water.

3. The ballast water treatment apparatus according to claim 2, wherein the chlorine-based sterilizing agent or the component substance thereof is injected into the inside of the ballast water piping from the injection part together with the reduction agent or after the reduction agent having been injected into the inside of the ballast water piping from the injection part.

4. The ballast water treatment apparatus according to claim 1, wherein the injection part has a double pipe structure with which the first piping is provided as an inner pipe, and the second piping is provided as an outer pipe.

5. The ballast water treatment apparatus according to claim 2, wherein the injection part has a double pipe structure with which the first piping is provided as an inner pipe, and the second piping is provided as an outer pipe.

6. The ballast water treatment apparatus according to claim 3, wherein the injection part has a double pipe structure with which the first piping is provided as an inner pipe, and the second piping is provided as an outer pipe.

7. The ballast water treatment apparatus according to claim 4, wherein the tip of the first piping is located in a location closer to the cross-sectional center of the ballast water piping than the tip of the second piping, the first piping being extended into the inside of the ballast water piping longer than the second piping.

8. The ballast water treatment apparatus according to claim 5, wherein the tip of the first piping is located in a location closer to the cross-sectional center of the ballast water piping than the tip of the second piping, the first piping being extended into the inside of the ballast water piping longer than the second piping.

9. The ballast water treatment apparatus according to claim 6, wherein the tip of the first piping is located in a location closer to the cross-sectional center of the ballast water piping than the tip of the second piping, the first piping being extended into the inside of the ballast water piping longer than the second piping.

10. The ballast water treatment apparatus according to claim 4, wherein the tip of the first piping is located away from the cross-sectional center of the ballast water piping in a direction passing through the cross-sectional center or in a direction opposite thereto within the range of a distance of half the cross-sectional radius.

11. The ballast water treatment apparatus according to claim 5, wherein the tip of the first piping is located away from the cross-sectional center of the ballast water piping in a direction passing through the cross-sectional center or in a direction opposite thereto within the range of a distance of half the cross-sectional radius.

12. The ballast water treatment apparatus according to claim 6, wherein the tip of the first piping is located away from the cross-sectional center of the ballast water piping in a direction passing through the cross-sectional center or in a direction opposite thereto within the range of a distance of half the cross-sectional radius.

13. The ballast water treatment apparatus according to claim 1, wherein there is provided a return piping route with which seawater, brackish water, fresh water or other water that is passed or stopped in the inside of the ballast water piping is returned from a location on the downstream side of the ballast water piping to a location on the upstream side of the ballast water piping and on the downstream side of a ballast pump.

14. The ballast water treatment apparatus according to claim 2, wherein there is provided a return piping route with which seawater, brackish water, fresh water or other water that is passed or stopped in the inside of the ballast water piping is returned from a location on the downstream side of the ballast water piping to a location on the upstream side of the ballast water piping and on the downstream side of a ballast pump.

15. The ballast water treatment apparatus according to claim 1, wherein the return piping route is a piping route with which seawater, brackish water, fresh water or other water that is passed or stopped in the inside of the ballast water piping is returned from a location on the downstream side of the injection part to a location on the upstream side of the injection part and on the downstream side of a ballast pump.

16. The ballast water treatment apparatus according to claim 2, wherein the return piping route is a piping route with which seawater, brackish water, fresh water or other water that is passed or stopped in the inside of the ballast water piping is returned from a location on the downstream side of the injection part to a location on the upstream side of the injection part and on the downstream side of a ballast pump.

17. The ballast water treatment apparatus according to claim 13, wherein the return piping route is a piping route with which seawater, brackish water, fresh water or other water that is passed or stopped in the inside of the ballast water piping is returned from a location on the downstream side of the injection part to a location on the upstream side of the injection part and on the downstream side of a ballast pump.

18. The ballast water treatment apparatus according to claim 14, wherein the return piping route is a piping route with which seawater, brackish water, fresh water or other water that is passed or stopped in the inside of the ballast water piping is returned from a location on the downstream side of the injection part to a location on the upstream side of the injection part and on the downstream side of a ballast pump.
